(19) Europäisches Patentamt
European Patent Office
Office européen des brevets

(11) **EP 1 776 015 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(21) Anmeldenummer: **05773325.5**

(22) Anmeldetag: **05.08.2005**

(51) Int Cl.:
**A23G 3/00** *(2006.01)*

(86) Internationale Anmeldenummer:
**PCT/EP2005/008483**

(87) Internationale Veröffentlichungsnummer:
**WO 2006/018151 (23.02.2006 Gazette 2006/08)**

(54) **ORGANOLEPTISCH VERBESSERTE UND BESONDERS LAGERSTABILE HARTKARAMELLEN**

ORGANOLEPTICALLY IMPROVED, IN PARTICULAR STORAGE STABLE HARD CANDY

CARAMELS DURS PARTICULIEREMENT STABLES AU STOCKAGE PRESENTANT DE MEILLEURES PROPRIETES ORGANOLEPTIQUES

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **10.08.2004 DE 102004038689**

(43) Veröffentlichungstag der Anmeldung:
**25.04.2007 Patentblatt 2007/17**

(73) Patentinhaber: **Südzucker Aktiengesellschaft Mannheim/Ochsenfurt**
**68165 Mannheim (DE)**

(72) Erfinder:
• **ARENZ, Margit**
**56820 Nehren (DE)**
• **BERNARD, Jörg**
**67283 Albsheim (DE)**

(74) Vertreter: **Schrell, Andreas et al**
**Gleiss Grosse Schrell & Partner**
**Patentanwälte Rechtsanwälte**
**Leitzstrasse 45**
**70469 Stuttgart (DE)**

(56) Entgegenhaltungen:
**EP-A- 0 625 578**     **WO-A-01/03513**
**DE-A1- 10 258 146**

## Beschreibung

Die vorliegende Erfindung betrifft Hartkaramellen und Hartkaramellmassen, enthaltend 61,0 bis 70,0 Gew.-% in der Trockensubstanz (TS) 1-O-$\alpha$-D-Glucopyranosyl-D-mannit (im folgenden 1,1-GPM genannt), 2,5 bis 17,0 Gew.-% in der Trockensubstanz (TS) Maltit und einen in Korrelation zu dem 1,1-GPM- und Maltit-Gehalt bestimmten Sorbit-Gehalt sowie Verfahren zu deren Herstellung.

Die EP-A2 0 303 295 beschreibt eine Hartkaramelle, die MesoErythrit als Hauptkomponente sowie weitere Saccharide, wie Saccharose, Glucose, Malzsirup, Fructose, Isomaltulose und Isomaltose enthält. Die US 4,587,119 beschreibt die Verwendung von Isomaltulose als Saccharose-Ersatz in bestimmten Nahrungsmitteln und pharmazeutischen Produkten. Die US 4,971,798 offenbart Hartkaramellen, die hydrierte Isomaltulose enthalten. Hydrierte Isomaltulose ist ein nahezu äquimolares Gemisch aus 6-O-$\alpha$-D-Glucopyranosyl-D-sorbit (im folgenden 1,6-GPS genannt) und dem stereoisomeren 1,1-GPM. Dieses Gemisch wird auch als Palatinit und im folgenden als Isomalt bezeichnet. Isomalt wird hergestellt, indem Saccharose enzymatisch isomerisiert, die entstandene Isomaltulose von den weiteren Bestandteilen, zum Beispiel Trehalulose und Isomaltose, abgetrennt und die Isomaltulose zu 1,6-GPS und 1,1-GPM hydriert wird, wobei 1,1-GPM als Dihydrat auskristallisiert. In der EP 0 625 578 B1 werden Karamellen erwähnt, die ein Süßungsmittelgemisch aus 1,1-GPS (1-O-$\alpha$-D-Glucopyranosyl-D-sorbit), 1,1-GPM und 1,6-GPS enthalten. Es wird erläutert, dass eine Erhöhung des 1,1-GPS-Gehaltes die Kristallisationsneigung des 1,1-GPM unterdrückt. Hartkaramellen werden in dieser Druckschrift nicht offenbart. Die DE 195 32 396 C2 offenbart Hartkaramellen, die ein 1,6-GPS- oder 1,1-GPM-angereichertes Gemisch enthalten. Unter einem 1,1-GPM-angereicherten Gemisch wird ein Gemisch aus 1,6-GPS und 1,1-GPM verstanden, welches ein Verhältnis von 1 Gew.-% : 99 Gew.-% bis < 43 Gew.-% : > 57 Gew.-% 1,6-GPS zu 1,1-GPM aufweist, das heißt > 57 bis 99 Gew.-% 1,1-GPM enthält. Die in dieser Druckschrift konkret offenbarten Hartkaramellen weisen einen 1,1-GPM-Gehalt von 85 Gew.-% auf. Die beschriebenen Hartkaramellen zeichnen sich jedoch dadurch aus, dass sie, insbesondere bei längerer Lagerung, zur Rekristallisation neigen, wobei sich kristallisierte Bereiche auf der Oberfläche der Hartkaramellen bilden beziehungsweise Trübungen in derselben auftreten. Beide Erscheinungen sind unerwünscht, da sie sowohl die Verkaufsfähigkeit als auch die Sensorik beeinflussen können.

Die EP 0 533 334 beschreibt ein Verfahren zur Herstellung von Hartkaramellen, wobei diese ein Zuckeralkoholgemisch mit einem Maltit-Gehalt von mehr als 77 Gew.-% aber weniger als 86 Gew.-% aufweisen. Es wird ausgeführt, dass ein Maltit-Gehalt von weniger als 77 Gew.-% zu hygroskopischen und klebrigen Hartkaramellen führt, während ein Maltit-Gehalt von mehr als 86 Gew.-% zu einer opaquen Trübung der Hartkaramellen als Resultat einer Maltit-Kristallisation führt. Auch die EP 0 611 527 beschreibt die Kristallisation von Maltit in Hartkaramellen, wobei vorzugsweise ein Maltitsirup mit einem Gehalt an Maltitol von mehr als 78 Gew.-% eingesetzt wird, da Sirupe mit einem geringen Maltit-Gehalt unzufriedenstellende Ergebnisse in Hinblick auf die Hygroskopizität, Kariogenität und anwendungstechnische Aspekte ergeben. Die EP 1 194 042 B1 offenbärt ein Sirup zur Herstellung von Hartkaramellen, wobei dieses 7 bis 52 Gew.-% 1,6-GPS, 24,5 bis 52 Gew.-% 1,1-GPM, 2,8 bis 13,8 Gew.-% Maltit und 0 bis 1,3 Gew.-% Sorbit aufweist. Die hergestellten Hartkaramellen erweisen sich aus organoleptischer Sicht, insbesondere während des Verzehrprozesses als verbesserungswürdig.

Die EP 1 217 898 B1 offenbart Hartkaramellen mit einem 1,1-GPM-Gehalt von 52 bis 60 Gew.-% sowie einem Sorbit-Gehalt von 0,5 bis 3,5 Gew.-%. Diese Hartkaramellen zeichnen sich insbesondere durch eine verbesserte Lagerstabilität aus. Als nachteilig erweist sich jedoch, dass bei der vom Konsumenten erwünschten hohen Lagerstabilität, die in den vorgenannten Hartkaramellen durch das Einstellen eines bestimmten 1,1-GPM-Gehaltes gewährleistet wird, insbesondere die Oberfläche der Hartkaramellen rau ist und vom Konsumenten als nicht-attraktiv empfunden wird. Hartkaramellen mit einer rauen Oberfläche werden vom Konsumenten genauso wenig als sensorisch attraktiv empfunden wie Hartkaramellen, die eine übermäßig glatte, gegebenenfalls sogar als schmierig empfundene Oberflächenbeschaffenheit aufzeigen. Es besteht daher nach wie vor ein Bedarf an Hartkaramellen, die bei möglichst hoher Lagerstabilität auch unter klimatisch ungünstigen Bedingungen, zum Beispiel hoher Luftfeuchtigkeit und hoher Umgebungstemperatur, vom Konsumenten als sensorisch attraktiv empfunden werden, dass heisst insbesondere kein oder nur geringes Auskristallisieren der enthaltenen Komponenten aufzeigen, eine nur geringe Rauigkeit beziehungsweise vorzugsweise überhaupt keine Rauigkeit auf ihrer Oberfläche verspüren lassen und gleichzeitig dem Konsumenten kein Gefühl von Schmierigkeit vermitteln. Als unattraktiv für den Konsumenten erweist sich ferner die Beobachtung, dass Hartkaramellen, die 1,1-GPM enthalten, beim Auflösen im Mundraum, dass heisst während des Verzehrs, zu einem Gefühl des Entstehens oder Ausbildens von Rauigkeit, wohl aufgrund von Rekristallisierung des 1,1-GPM, neigen.

Das der vorliegenden Erfindung zugrundeliegende technische Problem besteht daher darin, Hartkaramellen bereitzustellen, die bei verbesserter Lagerstabilität eine zumindest gleichbleibende oder verbesserte sensorische Attraktivität beziehungsweise bei zumindest gleichbleibender Lagerstabilität ein nochmals verbessertes organoleptisches Empfinden beim Verbraucher, auch und gerade während des Verzehrs, auslösen.

Die Lösung dieses technischen Problems wird durch die Bereitstellung einer Hartkaramelle und einer Hartkaramellmasse erreicht, die jeweils einen 1,1-GPM-Gehalt von 61 bis 70 Gew.-% (Gew.-%-Angaben gemäß der vorliegenden Lehre sind immer bezogen auf Gesamttrockensubstanz der Hartkaramelle bzw. der Hartkaramellmasse, falls nicht anders angegeben), einen Maltit-Gehalt von 2,5 bis 17 Gew.-% und eine Sorbit-Konzentration (im folgenden auch als [S] oder [Sorbit] bezeichnet) enthält, der in genauer Abstimmung, das heisst in Abhängigkeit, vom in den vorstehend genannten Grenzen eingestellten 1,1-GPM- und Maltit-Gehalt bestimmt wird. Die Sorbit-Konzentration errechnet sich in Abhängigkeit von dem in der erfindungsgemäßen Hartkaramelle oder in der Hartkaramellmasse eingesetzten 1,1-GPM- und Maltit-Gehalt nach der Gleichung

$$[Sorbit] = c + b \times [1,1\text{-GPM}] + a \times [1,1\text{-GPM}] \times [Maltit]$$

wobei a = 0,0016 bis 0,0005
b = -0,0139 bis 0,0019, insbesondere -0,004 bis 0,0019, und
c = 0,9 bis 0,19, insbesondere 0,9 bis 0,2, und
wobei Konzentrationsangaben [ ] in g/100g Gesamttrockensubstanz erfolgen und x eine Multiplikation bedeutet.

Die Erfindung stellt also die technische Lehre bereit, dass eine besonders, lagerstabile und sensorisch besonders attraktive Hartkaramelle bereitgestellt werden kann, wenn die Hartkaramelle einen 1,1-GPM und einen Maltit-Gehalt aufweist, der in den vorgenannten Bereichen liegt und die einen Sorbit-Gehalt aufweist, der gemäß vorliegender Gleichung ausgeführt ist. Die Erfindung bereichert den Stand der Technik dadurch, eine Korrelation zwischen den Gehalten an Sorbit, 1,1-GPM und Maltit aufgezeigt zu haben, die zu besonders vorteilhaften Hartkaramellen und Hartkaramellmassen führt. Die vorgenannte Gleichung ermöglicht es dem Fachmann ohne weiteres, zum Beispiel bei einem gegebenem GPM- und Maltit-Gehalt den Sorbit-Gehalt so einzustellen, dass eine vorteilhafte Hartkaramelle und Hartkaramellmasse bereitgestellt werden kann. Umgekehrt lässt sich beispielsweise bei Vorhandensein eines Rohstoffes mit einem konkreten Sorbit- und Maltit-Gehalt ohne weiteres der 1,1-GPM-Gehalt so einstellen, dass eine erfindungsgemäße Hartkaramelle und Hartkaramellmasse bereitgestellt wird. Schließlich ermöglicht es die Erfindung, bei einem vorgegebenen Sorbit- und 1,1-GPM-Gehalt den Maltit-Gehalt so einzustellen, dass eine vorteilhafte Hartkaramelle oder Hartkaramellmasse erhalten wird.

Die Erfindung sieht also vor, dass die erfindungsgemäße Hartkaramelle oder die Hartkaramellmasse 1,1-GPM in einer Menge von 61,0 bis 70,0 Gew.% sowie Maltit in einer Menge von 2,5 bis 17,0 Gew.-%, vorzugsweise von 5,0 bis 16,0 Gew-%, sowie Sorbit in einer gemäß der Gleichung berechneten Konzentration [S] enthält.

Die Erfindung löst das ihr zugrunde liegende technische Problem auch durch die Bereitstellung einer Hartkaramelle und einer Hartkaramellmasse, die jeweils einen 1,1-GPM-Gehalt von 61 bis 70 Gew.-%, bevorzugt 62 bis 68 Gew.-%, einen Maltit-Gehalt von 2,5 bis 17 Gew.-%, bevorzugt 2,5 bis 16 Gew.-%, besonders bevorzugt 5 bis 16 Gew.-% und einen Sorbit-Gehalt von 0,1. bis 1,6 Gew.%, bevor zugt 0,2 bis 1,55 Gew.-%, besonders bevorzugt 0,4 bis 1,0 Gew.-%, enthält.

In bevorzugter Ausführungsform kann vorgesehen sein, den genannten Maltit- und. Sorbit-Gehalt durch Verwendung eines Maltitsirups, zum Beispiel Lycasin, mit entsprechendem Maltit- und Sorbit-Gehalt einzustellen.

Die erfindungsgemäßen Hartkaramellen zeichnen sich überraschenderweise bei vom Konsumenten als attraktiv empfundener Organoleptik gleichzeitig durch eine wesentlich geringere Neigung zur Rekristallisation als bekannte Hartkaramellen, insbesondere als aus Isomalt hergestellte Hartkaramellen, aus. Ihre Lagerfähigkeit ist dadurch insbesondere gegenüber Isomalt-Hartkaramellen erheblich verbessert. Die Bildung von kristallinen Bereichen auf der Oberfläche der Hartkaramellen sowie von trüben Zonen innerhalb der Hartkaramellen wird erfindungsgemäß weitgehend oder ganz vermieden beziehungsweise tritt erst erheblich später auf. Erfindungsgemäße Hartkaramellen zeichnen sich darüber hinaus zusätzlich, insbesondere bei Auflösen im Mundraum, das heißt während des Verzehrs, durch ein als sehr angenehm empfundenes sensorisches Gefühl aus, wobei dieses sich allein in der vorliegenden Kombination der konkreten Gehalte an 1,1-GPM, Sorbit und Maltit einstellt. Ein bei herkömmlichen 1,1-GPM-haltigen Hartkaramellen, insbesondere hohe Gehalte, zum Beispiel an 1,1-GPM-Gehalte über 70 Gew.-% aufweisenden Hartkaramellen beobachtetes Entstehen von Rauigkeit während des Verzehrs wird erfindungsgemäß vermieden. Gegenüber hohe Gehalte an 1,1-GPM aufweisenden Hartkaramellen zeichnen sich die erfindungsgemäßen Hartkaramellen also insbesondere durch eine verbesserte Sensorik bei mindestens gleichbleibender Lagerstabilität aus.

Im Zusammenhang mit der vorliegenden Erfindung wird unter einer Hartkaramelle ein amorphes Produkt verstanden, welches herstellbar ist, indem man einer wässrigen Lösung oder Suspension eines Süßungsmittels, wie zum Beispiel einem Zuckeraustauschstoff, durch Verdampfung Wasser entzieht, sodass die Lösung oder Suspension des Zuckeraustauschstoffes aufkonzentriert wird und dieses Konzentrat in eine beliebige Form bringt, zum Beispiel gießt oder prägt. Hartkaramellen können auch durch Schmelzextrusion eines trockenen Süßungsmittelgemisches hergestellt werden. Selbstverständlich können der Hartkaramelle, die, sofern sie neben körpergebendem Zucker oder Süßungsmittel keine weiteren Zutaten enthält, auch als Glaskörper oder Hartkaramellmasse bezeichnet wird, bei ihrer Herstellung weitere Bestandteile wie Aromen, Farbstoffe, Intensiv-Süßstoffe oder ähnliches zugefügt werden.

Im Zusammenhang mit der vorliegenden Erfindung werden unter dem Begriff "süßendes Agens" Substanzen verstanden, die Süßkraft aufweisen und zum Beispiel Lebensmitteln oder Getränken zugesetzt werden, um einen Süßegeschmack hervorzurufen. Im Zusammenhang mit der vorliegenden Erfindung werden die "süßenden Agenzien" unterteilt in "Zucker" wie Saccharose, Glucose oder Fructose, die Körper und Süßkraft geben sowie "Süßungsmittel", also Stoffe, die keine Zucker sind aber trotzdem Süßkraft aufweisen, wobei letztere wiederum untergliedert werden in "Zuckeraustauschstoffe", also süßende Agenzien, die einen Körper und einen physiologischen Brennwert zusätzlich zu einer Süßkraft aufweisen (körpergebende Süßungsmittel), und "Intensivsüßstoffe", also Stoffe, die in der Regel eine sehr hohe Süßkraft, aber keinen Körper und in der Regel keinen oder nur einen geringfügigen physiologischen Brennwert aufweisen. Zuckeraustauschstoffe sind in der Regel Zuckeralkohole.

Die Lagerstabilität wurde im Rahmen der vorliegenden Erfindung bestimmt, in dem die Hartkaramellen drei Tage offen bei 25°C und 80% relativer Luftfeuchtigkeit gelagert wurden. 72 Stunden nach Beginn der Lagerung wurden die Hartkaramellen einer organoleptischen Beurteilung unterzogen, wobei einerseits das Ausmaß visuell wahrnehmbarer Rekristallisation und andererseits die Klebrigkeit der Hartkaramelle analysiert wurde. Eine verbesserte Lagerstabilität im Rahmen der vorliegenden Erfindung liegt insbesondere dann vor, wenn Vergleichskaramellen hinsichtlich der visuell wahrnehmbaren Rekristallisation und/oder ihrer Klebrigkeit als schlechter zu beurteilen sind, insbesondere, wenn die erfindungsgemäßen. Hartkaramellen ein geringeres Ausmaß der visuell wahrnehmbaren Rekristallisation und/oder ein geringeres Ausmaß an Klebrigkeit zeigen.

Die sensorischen Eigenschaften der erfindungsgemäßen Hartkaramellen wurden im Rahmen der vorliegenden Erfindung insbesondere anhand frisch hergestellter Hartkaramellen beurteilt, wobei die Hartkaramellen jeweils von mindestens 5 voneinander unabhängigen Probanden beurteilt und in eine Sensorik Skala mit den Stufen 1 (glatt) bis 3 (rau) einzustufen waren. Eine verbesserte Sensorik liegt insbesondere dann vor, wenn die Hartkaramellen gegenüber Vergleichskarämellen ein geringeres Ausmaß an Rauigkeit und/oder ein geringeres Ausmaß an Schmierigkeit/Klebrigkeit aufweisen, wobei die Rauigkeit sowohl eine Anfangsrauigkeit, die eine Hartkaramelle bereits vor Verzehr aufweist als auch eine sich während des Verzehrs im Mund bildende Rauheit ist.

In einer besonders bevorzugten Ausführungsform der vorliegenden Erfindung sind Hartkaramellen oder eine Hartkaramellmasse vorgesehen, die einen 1,1-GPM-Gehalt von 62 bis 68 Gew.-% aufweisen. ' In einer weiteren bevorzugten Ausführungsform ist vorgesehen, dass bei einem Maltit-Gehalt von 2,5 bis 17,0 Gew.-% und einem 1,1-GPM-Gehalt von 61,0 bis 70,0 Gew.-%, vorzugsweise 62,0 bis-68,0 Gew.-%, der Sorbit-Gehalt 0,1 bis 1,6 Gew.-%, unter Berücksichtigung der vorgenannten Gleichung, beträgt. In einer weiteren bevorzugten Ausführungsform ist vorgesehen, dass der Sorbit-Gehalt bei einem Maltit-Gehalt von 2,5 bis 17,0 Gew.-% und einem 1,1-GPM-Gehalt von 61,0 bis 70,0 Gew.-%, vorzugsweise 62,0 bis 68,0 Gew.-%, unter Berücksichtigung der vorstehend aufgeführten Gleichung 0,2 bis 1,55 Gew.-%, vorzugsweise 0,4 bis 1,0 Gew.-% beträgt.

In einer weiteren bevorzugten Aufführungsform ist vorgesehen, dass bei einem Maltitgehalt von 2,5 bis 17 Gew.-% und einem 1,1-GPM-Gehalt von 61 bis 70 Gew.-%, vorzugsweise 62 bis 68 Gew.-%, der Sorbitgehalt 0,1 bis 1,6 Gew.-%, bevorzugt 0,1 bis 0,9 Gew-%, beträgt.

In einer weiteren bevorzugten Ausführungsform ist vorgesehen, dass bei einem Maltitgehalt von 2,5 bis 17 Gew.-% und einem 1,1-GPM-Gehalt von 61,0 bis 70 Gew.-%, vorzugsweise 62,0 bis 68,0 Gew.-%, der Sorbitgehalt 0,2 bis 1,55 Gew.-%, vorzugsweise 0,4 bis 1,0 Gew.-%, insbesondere 0,4 bis 0,9 Gew.-% beträgt.

In einer besonderen Ausführungsform der vorliegenden Erfindung weist die erfindungsgemäße Hartkaramelle beziehungsweise Hartkaramellmasse als einzige und alleinig vorkommende Zuckeraustauschstoffe und/oder als einzige und alleinig vorkommende Zuckeralkohole Maltit, Sorbit und 1,1-GPM auf. In einer weiteren bevorzugten Ausführungsform der vorliegenden Erfindung weist die erfindungsgemäße Hartkaramelle beziehungsweise Hartkaramellmasse, als einzige und alleinig vorkommende Zuckeralkohole oder Zucker austauschstoffe Maltit, Sorbit, 1,1-GPM und 1,6-GPS auf. In einer weiteren bevorzugten Ausführungsform weist die erfindungsgemäße Hartkaramelle beziehungsweise Hartkaramellmasse als einziges und alleinig vorkommendes körpergebendes süßendes Agens, insbesondere als einziges und alleinig vorkommendes süßendes Agens Maltit, Sorbit und 1,1-GPM auf. In einer weiteren bevorzugten Ausführungsform weist die vorliegende erfindungsgemäße Hartkaramelle beziehungsweise Hartkaramellmasse als einziges und alleinig vorkommendes körpergebendes Agens, bevorzugt als einziges und alleinig vorkommendes süßendes Agens, Maltit, Sorbit, 1,1-GPM und 1,6-GPS auf. In einer besonders bevorzugten Ausführungsform ist die vorliegende erfindungsgemäße Hartkaramelle beziehungsweise Hartkaramellmasse zuckerfrei, und/oder akariogen und/oder brennwertreduziert und/oder kalorienreduziert. In einer weiteren Ausführungsform ist die erfindungsgemäße Hartkaramelle beziehungsweise Hartkaramellenmasse frei von Intensiv-Süßstoffen. Die Harkaramelle kann, falls gewünseht, weitere Hilfs oder Zusatzstoffe enthalten, wie weitere Süßungsmittel, zum Beispiel Zuckeralkohole Zuckeraustauschstoffe oder Intensiv-Süßstoffe, Farbstoffe, Geschmacksstoffe, Aromen, lebensmittelverträgliche Säuren, Konservierungsmittel, Wirkstoffe, Füllstoffe, Fette, Fettersatzstoffe, Mineralsalze, enthaltend zum Beispiel $Ca^{2+}$, NaCl, Trinatriumcitrat, Phosphat oder $Mg^{2+}$, oder Bindemittel. So kann die erfindungsgemäße Karamelle Zuckeralkohole, insbesondere 1,6-GPS, 1,1-GPS, hydrierte und/oder nicht hydrierte Stärke-Hydrolysate (HSH), Erythrit, Xylit, Maltotriit, Lactit, Maltodextrine und/oder Mannit enthalten, Maltotriit kann in bevorzugter Ausführungsform in einem Gehalt von 0 bis 8 Gew.-%, vorzugsweise 3 bis 8 Gew.-% vorhanden sein. Mannit kann in bevorzugter Weise in einer Menge von 0,4 bis 4 Gew.-% verwendet werden. Erfindungsgemäß kann als Wirkstoff insbesondere ein medizinisch aktiver Stoff zugesetzt werden, der prophylaktische oder therapeutische Wirkung auf den menschlichen oder tierischen Körper entfaltet, zum Beispiel Antihistamine, Antibiotica, Fungizide, Microbizide, Hexylresorcin, Dextromethorphan-Hydrobromid, Menthol, Nicotin, Coffein, Vitamine, Zink, Eukalyptus, Benzocain, Cetylpyridinium, Fluoride, Phenylpropanolamin oder andere pharmazeutisch wirksame Substanzen.

Die erfindungsgemäßen Hartkaramellen können Aromastoffe, wie Pflanzen- und Fruchtöle, Zitrusöle, Blüten- oder Blattöle, Öle aus Kirsche, Erdbeere, Menthol, Eukalyptus, Pfefferminz, Honig oder grüner Minze, Fruchtessenzen, Grüner-Tee-Extrakt oder natürliche oder synthetische Färbemittel etc. enthalten. Die genannten Aromastoffe werden vorzugsweise in einer Menge von 0,05 bis 3 Gew.-% zugegeben. Die Hartkaramellen können in bevorzugter Ausgestaltung der Erfindung auch Bindemittel, wie Alginate, Cellulose, Gelatine oder pflanzliche Gummen enthalten.

Es kann auch vorgesehen sein, den erfindungsgemäßen Hartkaramellen Intensivsüßstoffe zur Erhöhung der Süßkraft zuzufügen, wie Aspartam, Cyclamat, Acesulfam-K, Saccharin, Sucralose, Glycyrrhizin, Monellin, Dulcin, Naringin, Dihydrochalkon, Neotame, Alitame, Neohesperidin DC (Dihydrochalkon), Stevioside, Thaumatin oder ähnliche.

Als Farbstoffe kommen erfindungsgemäß synthetische oder natürliche Farbstoffe in Betracht. Als synthetischer Farbstoff kann beispielsweise Erythrosin, Indigo Carmine, Allurarot, E171, Tartrazin, Titandioxid oder ähnlichen verwendet werden. Natürliche Farbstoffe können Carotinoide, zum Beispiel Betacarotine, Riboflavine, Chlorophyll, Anthocyane, zum Beispiel aus der Roten Bete, Betanin oder ähnliche sein. Im Fall der Verwendung von synthetischen Farbstoffen werden typischerweise 0,01 bis 0,03 Gew.-% an Farbstoff eingesetzt, während im Fall natürlicher Farbstoffe bevorzugt 0,1 bis 1 Gew.-% verwendet werden.

Als Füllstoffe können beispielsweise Polydextrose öder Inulin dienen. Als Fettersatzstoffe kommen beispielsweise Caprenin, Salatrim oder Olestra in Betracht. Als Fette können pflanzliche Fette, zum Beispiel ungehärtete Fette, oder Milchfett verwendet werden.

Als lebensmittelverträgliche organische Säuren können beispielsweise Zitronensäure, Äpfelsäure, Milchsäure, Weinsäure, Ascorbinsäure oder ähnlich wirkende lebensmittelverträgliche Säuren eingesetzt werden.

Die erfindungsgemäßen Hartkaramellen können auch ein Milcherzeugnis enthalten, zum Beispiel ein Molkereierzeugnis wie ein Vollmilchpulver oder Sahne. Derartige Milcherzeugnisse können bevorzugt in einer Menge von 0 bis 9 Gew.-% vorhanden sein.

Die erfindungsgemäßen Hartkaramellen können auch Emulgatoren, wie Lecithin, zum Beispiel Sojalecithin oder ähnliches enthalten, zum Beispiel in einer Menge von 0 bis 5 Gew.-%.

Die Erfindung sieht daher auch eine Hartkaramelle vor, die in den erfindungsgemäßen Mengen 1,1-GPM, Sorbit und Mannit sowie einen oder mehrere Zuckeralkohole ausgewählt aus der Gruppe bestehend aus 1,6-GPS, 1,1-GPS, höhere Polyole und Maltotriit enthält und zusätzlich 1 bis 10 Gew.-% weitere Stoffe ausgewählt aus der Gruppe bestehend aus Intensiv-Süßstoffe, Füllstoffe, Geschmacksoder Aromastoffe, Farbstoffe, medizinisch wirksame Bestandteile, lebensmittelverträgliche Säuren, Fettersatzstoffe, Fett, Molkereierzeugnisse und/oder Mineralsalze und/oder Emulgatoren enthält.

Selbstverständlich kann die erfindungsgemäße Hartkaramelle oder Hartkaramellenmasse wie ausgeführt auch weitere Zuckeralkohole, wie 1,6-GPS und/oder 1,1-GPS enthalten. In bevorzugter Ausgestaltung weist die erfindungsgemäße Hartkaramelle neben den genannten Mengen an 1,1-GPM, Maltit und Sorbit mindestens ein weiteres Süßungsmittel auf, vorzugsweise 1,6-GPS, insbesondere 5 bis 36,4 Gew.-%, vorzugsweise 11,4 bis 36,4 Gew.-% 1,6-GPS, wobei bevorzugt vorgesehen sein kann, anstelle, vorzugsweise eines kleinen, Anteils von 1,6-GPS, zum Beispiel eines Anteils von 1 bis 8 Gew.%, Maltotriit, höhere Polyole, 1,1-GPS, Aromastoffe, Mannit, lebensmittelverträgliche Säuren und/oder Fette beziehungsweise Milcherzeugnisse in die Hartkaramelle einzuarbeiten. Bevorzugt kann auch vorgesehen sein, eine Hartkaramelle bereitzustellen, die 61 bis 70 Gew.-% 1,1-GPM, 2,5 bis 17 Gew.-% Maltit, 0,1 bis 1,6 Gew,-% Sorbit und 5,0 Gew.-% bis 36,4 Gew.-%, bevorzugt 11,4 Gew.-% bis 36,4 Gew.-% eines oder mehrerer Stoffe enthält, ausgewählt aus der Gruppe bestehend aus Maltotriit, 1,6-GPS, 1,1-GPS und höhere Polyole, zum Beispiel 1,5 bis'4,2 Gew.-% Maltotriit und/oder 3,0 bis 13,5 Gew.-% höhere Polyole und/oder 5 bis 26,4 Gew.-% 1,6-GPS. Gegebenenfalls können weitere Stoffe wie Aromastoffe, lebensmittelverträgliche Säuren, Farbstoffe oder/und Molkereierzeugnisse und/oder Emulgatoren vorhanden sein. Die erfindungsgemäße Karamelle oder Hartkaramellmasse kann, wie erläutert, vorzugsweise zuckerfrei, also diabetiker-geeignet und zahnfreundlich sein. Es kann aber auch vorgesehen sein, dass in der Karamelle Zucker, wie Saccharose, Glucose, Fructose oder ähnliches vorhanden sind.

Die Erfindung betrifft auch ein Verfahren zur Herstellung der erfindungsgemäßen Hartkaramellen oder Hartkaramellmasse, wobei eine wässrige Lösung oder Suspension, enthaltend ein Edukt-Gemisch aus den vorgenannten Mengen an 1,1-GPM, Maltit und Sorbit, zum Beispiel 61 bis 70 Gew.-% 1,1-GPM und 2,5 bis 17,0 Gew.-% Maltit, sowie die sich aus der Gleichung ergebende Sorbitmenge [S] auf zum Beispiel 145 bis 170°C, erhitzt, evaporiert, abgekühlt und auf einen Trockensubstanzgehalt von mindestens 95 Gew.-%, 96, 97, 98 oder 99,3 Gew.-%, konzentriert wird. Die Erfindung betrifft also auch Hartkaramellen oder eine Hartkaramellmasse mit einem Wassergehalt von unter 5 Gew.-%, insbesondere unter 4 Gew.-%, bevorzugt unter 3 Gew.-%, bevorzugt unter 2 Gew.-% beziehungsweise unter 0,7 Gew.-% (bezogen auf das Gesamtgewicht der Hartkaramelle). Anschließend wird abgekühlt und geformt. Die Aufkonzentrierung erfolgt vorteilhafterweise durch Evaporation von Wasser durch Kochen und/oder Anlegen von Vacuum, beispielsweise satzweise oder kontinuierlich. Die Herstellung der Hartkaramellen kann auch mittels Schmeizextrusion durchgeführt werden.

Die Erfindung betrifft auch ein Verfahren zur Herstellung der erfindungsgemäßen Hartkaramellen oder Hartkaramellmasse, wobei eine wässrige Lösung oder Suspension, enthaltend ein Edukt-Gemisch aus den vorgenannten Mengen an 1,1-GPM; Maltit und Sorbit, zum Beispiel 61 bis 70 Gew.-% 1,1-GPM und 2,5 bis 17,0 Gew.-% Maltit, sowie 0,1 bis 1,6 Gew.-%, insbesondere 0,1 bis 0,9 Gew.-% Sorbit auf zum Beispiel 145 bis 170°C erhitzt, evaporiert, abgekühlt und auf einen Trockensubstanzgehalt von mindestens 95 Gew.-%, 96, 97, 98 oder 99,3 Gew.-% konzentriert wird.

Die Hartkaramellen der vorliegenden Erfindung können in geprägter oder gegossener Form vorliegen und gegebenenfalls Füllungen, beispielsweise Maltit-Sirup, enthalten.

Die Erfindung betrifft daher Hartkaramellen ohne Füllung ebenso wie Hartkaramellen mit Füllung, wobei die Füllung in fester oder flüssiger Form vorliegen kann und nicht notwendigerweise aus der Hartkaramellenmasse der vorliegenden Erfindung hergestellt sein muss. Vielmehr kann vorgesehen sein, eine derartige Hartkaramelle so auszuführen, dass lediglich deren Decke aus der erfindungsgemäßen Hartkaramellmasse hergestellt ist, während die Füllung aus einem anderen Material, insbesondere einem zuckerfreien Material aufgebaut ist.

Insbesondere betrifft die vorliegende Erfindung Hartkaramellen bestehend aus oder enthaltend die erfindungsgemäße Hartkaramellmasse. So kann eine gefüllte Hartkaramelle vorgesehen sein, deren Füllung beliebiger Natur ist, zum Beispiel ein zuckerfreies Süßungsmittel enthält und deren Decke aus der erfindungsgemäßen Hartkaramellmasse besteht.

Die Erfindung betrifft aber auch ungefüllte Hartkaramellen bestehend aus der genannten erfindungsgemäßen Hartkaramellmasse oder enthaltend diese Hartkaramellmasse unter Zusatz der genannten Zusatzstoffe.

Die Erfindung betrifft bevorzugt beispielsweise Hartkaramellen, die ein Süßungsmittelgemisch oder bulking agent aus Maltit, Sorbit, 1,1-GPM und gegebenenfalls 1,6-GPS und/oder 1,1-GPS und/oder Maltotriit und/oder höhere Polyole in den erfindungsgemäßen Mengen in einer Gesamt-Menge von 63,6 bis 99 Gew.%, vorzugsweise 90 bis 99 Gew.%, einen Aroma- oder Geschmacksstoff in einer Menge von 0,01 bis 2,5 Gew.%, einen Intensivsüßstoff in einer Menge von 0,05. bis 0,25 Gew.-%, eine organische Säure in einer Menge von 0,1 bis 5,0 Gew.-% (jeweils bezogen auf das Gesamtgewicht der Karamelle) Wasser und gegebenenfalls bei Verwendung als medizinisch aktiver Hartkaramelle, einen medizinischen Wirkstoff in einer Menge von zum Beispiel 1,0 bis 15 mg pro Einheit enthalten. In einer weiteren Ausführungsform ist eine Hartkaramelle bereitgestellt, die ein Süßungsmittelgemisch aus Maltit, Sorbit, 1,1-GPM und gegebenenfalls 1,6-GPS und/oder 1,1-GPS und/oder Maltotriit und/oder höhere Polyole in den erfindungsgemäßen Mengen in einer Gesamt-Menge vom 63,6 bis 99 Gew.-%, vorzugsweise 90 bis 99 Gew.-% (bezogen auf das Gesamt-Trockengewicht der Hartkaramelle), einen Aroma-oder Geschmacksstoff in einer Menge von 0,01 bis 2,5 Gew.-%, einen Intensiv-Süßstoff in einer Menge von 0,05 bis 0,25 Gew.-%, eine organische Säure in einer Menge von 0,1 bis 5,0 Gew.-%, einen Emulgator in einer Menge von 0,01 bis 2,5 Gew.% und ein Molkereierzeugnis in einer Menge von 0 Gew.%, vorzugsweise 0,25 bis 9 Gew.-% sowie gegebenenfalls einen medizinischen Wirkstoff in einer Menge von zum Beispiel 1,0 bis 15 mg/Einheit enthält.

Weitere vorteilhafte. Ausgestattungen können den Unteransprüchen entnommen werden.

Die Erfindung wird anhand der folgenden Beispiele und der dazugehörigen Figuren näher erläutert.

Die Figuren zeigen :

Die Figuren 1 bis 7 zeigen Fotos von erfindungsgemäßen Hartkaramellen sowie von Kontroll-Hartkaramellen nach 3-tägiger Lagerung bei 25°C bei 80% relativer Luftfeuchte.

Die Figuren 8 bis 13 zeigen in graphischer Form die Bewertung der sensorischen Eigenschaften von erfindungsgemäßen Hartkaramellen und Kontroll-Hartkaramellen.

**Beispiel 1: Herstellung von Hartkaramellen/Glaskörpern**

Die Zusammensetzungen der eingesetzten Hartkaramellen beziehungsweise Glaskörper ergeben sich aus nachfolgenden Rezepturen.

**A) Detaillierte Zusammensetzung**

Tabelle 1

| Glaskörper | WS34/3 (Kontrolle) |
|---|---|
| Mannit [g/100gTS] | 0,03 |
| Sorbit [g/100gTS] | 0,03 |
| Glucosylglycerin [g/100gTS] | 0,00 |
| Fructose [g/100gTS] | 0,00 |
| Glucose [g/100gTS] | 0,00 |
| Desoxydisaccharidalkohol [g/100gTS] | 0,02 |
| 1.1-GPS [g/100gTS] | 0,06 |
| GPI [g/100gTS] | 0,11 |
| GPM [g/100gTS] | 84,90 |
| GPS [g/100gTS] | 13,90 |
| Summe weitere Glucosylglycitole [g/100gTS] | 0,09 |
| Palatinose [g/100gTS] | 0,00 |
| 6'-Glucosyl-1.1 GPS [g/100gTS] | 0,00 |
| 6'-Glucosyl-1.1 GPM [g/100gTS] | 0,01 |
| 6'-Glucosyl-1.6 GPS [g/100gTS] | 0,01 |
| 1-Glucosyl-1.6-GPS [g/100gTS] | 0,01 |
| 6-Glucosyl-1.1-GPM [g/100gTS] | 0,04 |
| Summe weitere DP-3H2 [g/100gTS] | 0,20 |
| Maltit [g/100gTS] | 0,00 |
| Maltotriit [g/100gTS] | 0,00 |
| Rest [g/100g TS] | 0,59 |

Tabelle 2

| Glaskörper | WS34/5 (Kontrolle) |
|---|---|
| Mannit [g/100gTS] | 0,06 |
| Sorbit [g/100gTS] | 1,79 |
| Desöxydisaccharidalkohbl [g/100gTS] | 0,02 |
| 1.1-GPS [g/100gTS] | 0,10 |
| GPI [g/100gTS] | 0,02 |
| GPM [g/100gTS] | 42,00 |
| GPS [g/100gTS] | 6,99 |
| Summe weitere Glucosylglycitole [g/100gTS] | 0,54 |
| 6'-Glucosyl-1.1 GPM [g/100gTS] | 0,02 |
| 6'-Glucosyl-1.6 GPS [g/100gTS] | 0,02 |
| 1-Glucosyl-1.6-GPS [g/100gTS] | 0.02 |
| 6-Glucosyl-1.1-GPM [q/100gTS] | 0,03 |

(fortgesetzt)

| Glaskörper | WS34/5 (Kontrolle) |
|---|---|
| Summe weitere DP-3H2 [g/100gTS] | 0,22 |
| Maltit [g/1.00gTS] | 26,60 |
| Mattotritt [g/100gTS] | 10,30 |
| Rest [g/100g TS] | 11,27 |

Tabelle 3

| Glaskörper | WS34/8 (Erfindung) |
|---|---|
| Mannit [g/100gTS] | 0,17 |
| Sorbit [g/100gTS] | 1,41 |
| Fructose [g/100gTS] | 0,02 |
| Glucose [g/100gTS] | 0,02 |
| Desoxydisaccharidalkohol [g/100gTS] | 0,02 |
| 1.1-GPS [g/100gTS] | 0,26 |
| GPI [g/100gTS] | 0,06 |
| GPM [g/100gTS] | 61,80 |
| GPS [g/100gTS] | 6,53 |
| Summe weitere Glucosylglycitole [g/100gTS] | 0,31 |
| 1-Glucosyl-1.6-GPS [g/100gTS] | 0,02 |
| 6-Glucosyl-1.1-GPM [g/100gTS] | 0,04 |
| Summe weitere DP-3H2 [g/100gTS] | 0,02 |
| Maltit [g/100gTS] | 16,60 |
| Maltotriit [g/100gTS] | 6,49 |
| Rest [g/100gt TS] | 6,23 |

Tabelle 4

| Sahne-Hartkaramelle | WS 34/10 (Isomalt Kontrolle) | WS 34/11 (Kontrolle) |
|---|---|---|
| Mannit [g/100gTS] | 0,04 | 0,05 |
| Sorbit [g/100gTS] | 0,07 | 0,89 |
| Glucosylglycerin [g/100gTS] | 0,01 | 0,01 |
| Glucose [g/100qTS] | 0,02 | 0,02 |
| Saccharose [g/100gTS] | 0,00 | 0,00 |
| Desoxydisaccharidalkohol [g/100gTS] | 0,05 | 0,05 |
| 1.1-GPS [g/100gTS] | 0.21 | 0,15 |
| GPI [g/100gTS] | 0,07 | 0,06 |
| GPM [g/100gTS] | 43,10 | 29,80 |

(fortgesetzt)

| Sahne-Hartkaramelle | WS 34/10 (Isomalt Kontrolle) | WS 34/11 (Kontrolle) |
|---|---|---|
| GPS [g/100gTS] | 46,70 | 32,30 |
| Summe weitere Glucosylglycitole [g/100gTS] | 0,54 | 0,79 |
| Isomelezitose [g/100gTS] | 0,00 | 0,06 |
| 6'-Glucosyl-1.1 GPM [g/100gTS] | 0,02 | 0,01 |
| 6'-Glucosyl-1.6 GPS [g/100gTS] | 0,02 | 0,02 |
| 1-Glucosyl-1.6-GPS [g/100gTS] | 0,08 | 0,06 |
| 6-Glucosyl-1.1-GPM [g/100gTS] | 0,07 | 0,07 |
| Summe weitere DP-3H2 [g/100gTS] | 0,45 | 0,56 |
| Maltit [g/100gTS] | 0,05 | 15,00 |
| Maltotriit [g/100gTS] | 0,02 | 5,76 |
| Rest [g/100g TS] | 8,48 | 14,34 |

Tabelle 5

| Sahne-Hartkaramelle | WS 34/17 (Erfindung) |
|---|---|
| Mannit [g/100gTS] | 0,15 |
| Sorbit [g/100gTS] | 1,15 |
| Glucose [g/100gTS] | 0,02 |
| Saccharose [g/100gTS] | 0,02 |
| Desoxydisaccharidalkohol [g/100gTS] | 0,02' |
| 1.1-GPS [g/100gTS] | 0,24 |
| GPI [g/100gTS] | 0,07 |
| GPM [g/100gTS] | 61,00 |
| GPS [g/100gTS] | 5,93 |
| Summe weitere Glucosylglycitole [g/100gTS] | 0,69 |
| Isomelezitose [g/100gTS] | 0,09 |
| Maltit [g/100gTS] | 14,60 |
| Maltotriit [g/100gTS] | 5,56 |
| Rest [g/100g TS] | 10,46 |

Tabelle 6

| Erdbeer-Hartkaramellen | WS34/19 (Isomalt - Kontrolle) | WS34/20 (Kontrolle) |
|---|---|---|
| Mannit [g/100gTS] | 0,31 | 0,17 |
| Sorbit [g/100gTS] | 0,38 | 1,34 |
| Glucosylglycerin [g/100gTS] | 0,02 | 0,01 |
| Fructose [g/100gTS] | 0,02 | 0,00 |

(fortgesetzt)

| Erdbeer-Hartkaramellen | WS34/19 (Isomalt - Kontrolle) | WS34/20 (Kontrolle) |
|---|---|---|
| Glucose [g/100gTS] | 0,16 | 0,11 |
| Desokydisaccharidalkohol [g/100gTS] | 0,05 | 0,04 |
| 1.1-GPS [g/100gTS] | 0,22 | 0,16 |
| GPI [g/100gTS] | 0,07 | 0,06 |
| GPM [g/100gTS] | 45,20 | 31,80 |
| GPS[g/100gTS] | 49,30 | 34,70 |
| Summe weitere Glucosylglycitole [g/100gTS] | 0,19 | 0,56 |
| Palatinose [g/100gTS] | 0,02 | 0,02 |
| Isomaltose [g/100gTS] | 0,00 | 0,05 |
| Isomelezitose [g/100gTS] | 0,00 | 0,44 |
| 6'-Glucosyl-1.1 GPS [g/100gTS] | 0,05 | 0,02 |
| 6'-Glucosyl-1.1 GPM [g/100gTS] | 0,21 | 0,11 |
| 6'-Glucosyl-1.6 GPS [g/100gTS] | 0,14 | 0,07 |
| 1-Glucosyl-1.6-GPS [g/100gTS] | 0,07 | 0,05 |
| 6-Glucosyl-1.1-GPM [g/100gTS] | 0,09 | 0,06 |
| Summe weitere DP-3H2 [g/100gTS] | 0,77 | 0,30 |
| Maltit [g/100gTS] | 0,03 | 14,50 |
| Maltotriit [g/100gTS] | 0,08 | 5,25 |
| Rest [g/100g TS] | 2,62 | 10,18 |

Tabelle 7

| Erdbeer-Hartkaramellen | WS34/26 (Erfindung) |
|---|---|
| Mannit [g/100gTS] | 0,29 |
| Sorbit [g/100gTS] | 1,53 |
| Glucose[g/100gTS] | 0,05 |
| Desoxydisaccharidalkohol [g/100gTS] | 0,02 |
| 1.1-GPS [g/100gTS] | 0,25 |
| GPI [g/100gTS] | 0,11 |
| GPM [g/100gTS] | 61,05 |
| GPS [g/100gTS] | 6,22 |
| Summe weitere Glucosylglycitole [g/100gTS] | 0,47 |
| Isomaltose [g/100gTS] | 0,01 |
| Isomelezitose [g/100gTS] | 0,16 |
| 6'-Glucosyl-1.6 GPS [g/100gTS] | 0,00 |
| 1-Glucosyl-1.6-GPS [g/100gTS] | 0,00 |
| 6-Glucosyl-1.1-GPM [g/100gTS] | 0,00 |

(fortgesetzt)

| Erdbeer-Hartkaramellen | WS34/26 (Erfindung) |
|---|---|
| Summe weitere DP-3H2 [g/100gTS] | 0,18 |
| Maltit [g/100gTS] | 15,80 |
| Maltotriit [g/100gTS] | 6,04 |
| Rest [g/100g TS] | 7,82 |

Tabelle 8

| Glaskörper | MS 216/1 (Kontrolle) |
|---|---|
| Glycerin [g/100gTS] | 0,15 |
| Mannit [g/100gTS] | 0,52 |
| Sorbit [g/100gTS] | 0,26 |
| Glucosylglycerin [g/100gTS] | 0,04 |
| Glucose [g/100gTS] | 0,23 |
| Desoxydisaccharidalkohol [g/100gTS] | 0,09 |
| 1.1-GPS [g/100gTS] | 0,14 |
| GPI [g/100gTS] | 0,07 |
| GPM [g/100gTS] | 68,70 |
| GPS [g/100gTS] | 27,70 |
| Summe weitere Glucosylglycitole [g/100gTS] | 0,50 |
| 6'-Glucosyl-1.1 GPS [g/100gTS] | 0,04 |
| 6'-Glucosyl-1.1 GPM [g/100gTS] | 0,40 |
| 6'-Glucosyl-1.6 GPS [g/100gTS] | 0,11 |
| 1-Glucosyl-1.6-GPS [g/100gTS] | 0,05 |
| 6-Glucosyl-1.1-GPM [g/100gTS] | 0,09 |
| Summe weitere DP-3H2 [g/100gTS] | 0,69 |
| Maltit [g/100gTS] | 0,06 |
| Maltotriit [g/100gTS] | 0,04 |

Tabelle 9

| Glaskörper | MS 216/5 (Kontrolle) |
|---|---|
| Glycerin [g/100gTS] | 0,09 |
| Mannit [g/100gTS] | 0,21 |
| Sorbit [g/100gTS] | 1,11 |
| Glucosylglycerin [g/100gTS] | 0,03 |
| Glucose [g/100gTS] | 0,13 |
| Desoxydisaccharidalkohol [g/100gTS] | 0,07 |

(fortgesetzt)

| Glaskörper | MS 216/5 (Kontrolle) |
|---|---|
| 1.1-GPS [g/100gTS] | 0,11. |
| GPI [g/100gTS] | 0,06 |
| GPM [g/100gTS] | 53,70 |
| GPS [g/100gTS] | 16,70 |
| Summe weitere Glucosylglycitole [g/100gTS] | 0,58 |
| 6'-Glucosyl-1.1 GPS [g/100gTS] | 0,02 |
| 6'-Glucosyl-1.1 GPM [g/100gTS] | 0,04 |
| 6'-Glucosyl-1.6 GPS [g/100gTS] | 0,04 |
| 1-Glucosyl-1.6-GPS [g/100gTS] | 0,01 |
| 6-Glucosyl-1.1-GPM [g/100gTS] | 0,05 |
| Summe weitere DP-3H2 [g/100gTS] | 0,51 |
| Maltit [g/100gTS] | 16,30 |
| Maltotriit [g/100gTS] | 6,32 |
| Rest [g/100g TS] | 3,92 |

Tabelle 10

| Glaskörper | MS 216/7 (Erfindung) |
|---|---|
| Glycerin [g/100gTS] | 0,09 |
| Mannit [g/100gTS] | 0.87 |
| Sorbit [g/100gTS] | 0,26 |
| Glucosylglycerin[g/100gTS] | 0,04 |
| Glucose [g/100gTS] | 0,37 |
| Desoxydisaccharidalkohol [g/100gTS] | 0,10 |
| 1.1-GPS [g/100gTS] | 0,21 |
| GPI [g/100gTS] | 0,14 |
| GPM [g/100gTS] | 65,30 |
| GPS [g/100gTS] | 26,20 |
| Summe weitere Glucosylglycitole [g/100gTS] | 0,64 |
| 6'-Glucosyl-1.1 GPS [g/100gTS] | 0,09 |
| 6'-Glucosyl-1.1 GPM [g/100gTS] | 0,77 |
| 6'-Glucosyl-1.6 GPS [g/100gTS] | 0,21 |
| 1-Glucosyl-1.6-GPS [g/100gTS] | 0,05 |
| 6-Glucosyl-1.1-GPM [g/100gTS] | 0,13 |
| Summe weitere DP-3H2 [g/100gTS] | 1,35 |
| Maltit [g/100gTS] | 2,61 |

(fortgesetzt)

| Glaskörper | MS 216/7 (Erfindung) |
|---|---|
| Mattotriit [g/100gTS] | 0,09 |
| Rest [g/100gTS] | 0,48 |

Tabelle 11

| Glaskörper | MS 216/13 (Erfindung) |
|---|---|
| Glycerin [g/100gTS] | 0,07 |
| Mannit [g/100gTS] | 0,03 |
| Sorbit [g/100gTS] | 0,53 |
| Desoxydisaccharidalkohol [g/100gTS] | 0,04 |
| 1.1-GPS [g/100gTS] | 0,05 |
| GPI [g/100gTS] | 0,03 |
| GPM [g/100gTS] | 61,80 |
| GPS [g/100gTS] | 9,03 |
| Summe weitere Glucosylglycitole [g/100gTS] | 0,20 |
| 6-Gludosyl-1.1 GPM [g/100gTS] | 0,03 |
| 6'-Glucosyl-1.6 GPS [g/100gTS] | 0,01 |
| 1-Glucosyl-1.6-GPS [g/100gTS] | 0,02 |
| 6-Glucosyl-1.1-GPM [g/100gTS] | 0,04 |
| Summe weitere DP-3H2 [g/100gTS] | 0,00 |
| Maltit [g/100gTS] | 15,80 |
| Maltotriit [g/100gTS] | 0,06 |
| Rest [g/100gTS] | 12,26 |

Tabelle 12

| Sahne-Hartkaramellen | MS 216/15 (Kontrolle) |
|---|---|
| Glycerin [g/100gTS] | 0,08 |
| Mannit [g/100gTS] | 0,03 |
| Sorbit [g/100gTS] | 0,05 |
| Glucosylglycerin [g/100gTS] | 0,09 |
| Desoxydisaccharidalkohol [g/100gTS] | 0,03 |
| 1.1-GPS [g/100gTS] | 0,17 |
| dP1 [g/100gTS] | 0,11 |
| GPM [g/100gTS] | 65,00 |
| GPS [g/100gTS] | 25,30 |

(fortgesetzt)

| Sahne-Hartkaramellen | MS 216/15 (Kontrolle) |
|---|---|
| Summe weitere Glucosylglycitole [g/100gTS] | 0,27 |
| 6'-Glucosyl-1.1 GPM [g/100gTS] | 0,03 |
| 6'-Glucosyl-1.6 GPS [g/100gTS] | 0,02 |
| 1-Glucosyl-1.6-GPS [g/100gTS] | 0,05 |
| 6-Glucosyl-1.1-GPM [g/100gTS] | 0,06 |
| Summe weitere DP-3H2 [g/100gTS] | 0,22 |
| Maltit [g/100gTS] | 0,00 |
| Maltotriit [g/100gTS] | 0,00 |
| Rest [g/100gTS] | 8,49 |

Tabelle 13

| Glaskörper | MS 216/28 (Erfindung) |
|---|---|
| Glycerin [g/100gTS] | 0,80 |
| Mannit [g/100gTS] | 0,04 |
| Sorbit [g/100gTS] | 0,35 |
| Glucosylglycerin [g/100gTS] | 0,02 |
| Glucose [g/100gTS] | 0,00 |
| Desoxydisaccharidalkohol [g/100gTS] | 0,04 |
| 1.1-GPS [g/100gTS] | 0,14 |
| GPI [g/100gTS] | 0,03 |
| GPM [g/100gTS] | 69,90 |
| GPS [g/100gTS] | 21,60 |
| Summe weitere Glucosylglycitole [g/100gTS] | 0,48 |
| 6'-Glucosyl-1.1 GPS [g/100gTS] | 0,00 |
| 6'-Glucosyl-1.1 GPM [g/100gTS] | 0,03 |
| 6'-Glucosyl-1.6 GPS [g/100gTS] | 0,01 |
| 1-Glucosyl-1.6-GPS [g/100gTS] | 0,02 |
| 6-Glucosyl-1.1-GPM [g/100gTS] | 0,06 |
| Summe weitere DP-3H2 [g/100gTS] | 0,02 |
| Maltit [g/100gTS] | 5,86 |
| Maltotriit [g/100gTS] | 2,21 |

Tabelle 14

| Glaskörper | MS 216/29 (Kontrolle) |
|---|---|
| Glycerin [g/100gTS] | 0,12 |
| Mannit [g/100gTS] | 0,02 |
| Sorbit [g/100gTS] | 0,32 |
| Glucosylglycerin [g/100g TS] | 0,02 |
| Desoxydisaccharidalkohol [g/100gTS] | 0,04 |
| 1.1-GPS [g/100gTS] | 0,10 |
| GPI [g/100gTS] | 0,02 |
| GPM [g/100gTS] | 79,10 |
| GPS-[g/100gTS] | 12,60 |
| Summe weitere Glucosylglycitole [g/100gTS] | 0,30 |
| 6'-Glucosyl-1.1 GPM [g/100gTS] | 0,02 |
| 6'-Glucosyl-1.6 GPS [g/100gTS] | 0,03 |
| 1-Glucosyl-1.6-GPS [g/100gTS] | 0,01 |
| 6-Gludosyl-1.1-GPM [g/100gTS] | 0,05 |
| Summe weitere DP-3H2 [g/100gTS] | 0,01 |
| Maltit [g/100gTS] | 5,58 |
| Maltotriit [g/100gTS] | 2,09 |

**Tabelle 15**

| Erdbeer-Hartkaramellen | MS-222/1 (Isomalt-Kontrolle) |
|---|---|
| Mannit [g/100gTS] | 0,07 |
| Sorbit [g/100gTS] | 0,15 |
| Glucosylglycerin [g/100gTS] | 0,04 |
| Glucose [g/100gTS] | 0,05 |
| Desoxydisaccharidalkohol [g/100gTS] | 0,13 |
| 1.1-GPS (g/100gTS) | 0,36 |
| GPI [g/100gTS] | 0.26 |
| GPM [g/100gTS] | 47,00 |
| GPS [g/100gTS] | 52,30 |
| Summe weitere Glucosylglycitole [g/100gTS] | 0,18 |
| Palatinose [g/100gTS] | 0,03 |
| 6'-Glucosyl-1.1 GPM [g/100gTS] | 0,02 |
| 6'-Glucosyl-1.6 GPS [g/100gTS] | 0,03 |
| 1-Glucosyl-1.6-GPS [g/100gTS] | 0,05 |
| 6-Glucosyl-1.1-GPM [g/100gTS] | 0,06 |

(fortgesetzt)

| Erdbeer-Hartkaramellen | MS-222/1 (Isomalt-Kontrolle) |
|---|---|
| Summe weitere DP-3H2 [g/100gTS] | 0,14 |
| Maltit [g/100gTS] | 0,05 |
| Maltotrüt [g/100gTS] | 0,00 |
| Rest [g/100gTS] | 0,00 |

Tabelle 16

| Glaskörper | MS 222/4 (Kontrolle) |
|---|---|
| Mannit [g/100gTS] | 0,04 |
| Sorbit [g/100gTS] | 0.22 |
| Glucose [g/100gTS] | 0,02 |
| Desoxydisaccharidalkohol [g/100gTS] | 0,06 |
| 1.1-GPS [g/100gTS] | 0,15 |
| GPI [g/100gTS] | 0,18 |
| GPM[g/100gTS] | 73,50 |
| GPS [g/100gTS] | 23,40 |
| Summe weitere Glucosylblycitole [g/100gTS] | 0,16 |
| 6'-Glucosyl-1.1 GPM [g/100gTS] | 0,03 |
| 6'-Glucosyl-1.6 GPS [g/100gTS] | 0,03 |
| 1-G.lucosyl-1.6-GPS [g/100gTS] | 0,03 |
| 6-Glucosyl-1.1-GPM [g/100gTS] | 0,05 |
| Summe weitere DP-3H2- [g/100gTS] | 0,03 |
| Maltit [g/100gTS] | 2,79 |
| Maltotriit [g/100gTS] | 1,05 |
| Rest [g/100gTS] | 0,00 |

Tabelle 17

| Glaskörper | MS 222/7 (Kontrolle) |
|---|---|
| Mannit [g/100gTS] | 0,03 |
| Sorbit [g/100gTS] | 0,38 |
| Glucose [g/100gTS] | 0,01 |
| Desoxydisaccharidalkohol [g/100gTS] | 0,04 |
| 1.1-GPS [g/100gTS] | 0,09 |
| GPI [g/100gTS] | 0,11 |
| GPM [g/100gTS] | 76,40 |
| GPS [g/100gTS] | 14,60 |

(fortgesetzt)

| Glaskörper | MS 222/7 (Kontrolle) |
|---|---|
| Summe weitere Glucosylglycitole [g/100gTS] | 0,14 |
| Summe weitere DP-3H2 [g/100gTS] | 0,00 |
| Maltit [g/100gTS] | 5,97 |
| Maltotriit [g/100gTS] | 2,28 |

Tabelle 18

| Erdbeerhartkaramellen | MS 222/10 (Erfindung) |
|---|---|
| Mannit [g/100gTS] | 0,1 |
| Sorbit [g/100gTS] | 0,39 |
| Glucose [g/100gTS] | 0,04 |
| Desoxydisaccharidalkohol [g/100gTS] | 0,04 |
| 1.1-GPS [g/100gTS] | 0,14 |
| GPI [g/100gTS] | 0,03 |
| GPM [g/100gTS] | 68,80 |
| GPS [g1100gTS] | 22,40 |
| Summe weitere Glucosylglycitole [g/100gTS] | 0,30 |
| 6'-Glucosyl-1.1 GPM [g/100gTS] | 0,03 |
| 6'-Glucosyl-1.6 GPS [g/100gTS] | 0,02 |
| 1-Glucosyl-1.6-GPS [g/100gTS] | 0,02 |
| 6-Glucosyl-1.1-GPM [g/100gTS] | 0,06 |
| Summe weitere DP-3H2 [g/100gTS] | 0,17 |
| Maltit [g/100gTS] | 5,67 |
| Maltötrüt [g/100gTS] | 2,19 |
| Rest [g/100gTS] | 0,00 |

Die Sahne-Hartkaramellen MS 216/15 enthielten neben den vorstehend aufgeführten Rezepturkomponenten außerdem Sahne (8,35 g/100g), Butterfett (3,93 g/100g), Salz (0,45 g/100g), Lecithin (Metarin P IP) (0,07 g/100g), Aspartam (0,05 g/100g), Acesulfam K (0,05 g/100g) und Vanillearoma (0,10 g/100g).

Die Erdbeerhartkaramellen MS 222/10 enthielten neben den vorstehend aufgeführten Rezepturkomponenten außerdem Erdbeer-Aroma (11 48 71 01 90 Silesia) (0,30 g/100g), DL-Apfelsäure (0,90 g/100g) und Vegex Carmine 20 ALB (22 46 290 CHR Hansen) (0,10 g/100g).

Der Wassergehalt der Hartkaramellen wurde auf ca. 1,5% eingestellt.

Die Sahnehartkaramellen WS 34/10, 34/11 und 34/17 enthielten neben den vorstehend aufgeführten Rezepturkomponenten außerdem jeweils Sahne (8,35 g/100g), Butterfett (3,93 g/100g), Salz (0,45 g/100g), Lecithin (Topcithin 300) (0,07 g/100g), Aspartam (0,05 g/100g), Acesulfam K (0,05 g/100g) und Vanillearoma (0,10 g/100g).

Die Erdbeerhartkaramellen WS 34/19, WS 34/20 und WS 34/26 enthielten neben den vorstehend aufgeführten Rezepturkomponenten außerdem jeweils DL-Äpfelsäure (0,90 g/100g), Erdbeer-Aroma (11 48 71 01 90 Silesia) (0,30 g/100g) und Vegex Carmine 20 ALB (22 46 290 CHR Hansen) (0,10 g/100g).

Erfindungsgemäße Beispielrezepturen werden als "Erfindung" gekennzeichnet. Rezepturen, die herkömmliches Isomalt als Hauptbestandteil des Glaskörpers aufweisen (WS 34/10, WS 34/19 und MS 222/1) wurden als Isomalt-Kontrolle bezeichnet und sind nicht erfindungsgemäß. Rezepturen, die von der erfindungsgemäßen Lehre abweichen, werden als "Kontrolle" bezeichnet.

**B) Herstellung der Glaskörper/Hartkaramellen**

Die Glaskörper wurden wie folgt hergestellt. Das jeweils angegebene Süßungsmittelgemisch wird mit Wasser im Satzkocher auf 155-160°C erhitzt und etwa 1 bis 1,5 Minuten vollem Vacuum ausgesetzt (Zugabe von Patentblau als Färbemittel, um Kristallisation besser analysieren, dass heisst visuell besser wahrnehmen, zu können). Die Masse wird auf einem Kühltisch unter ständigem Falten abgekühlt. Die abgekühlte, plastisch verformbare Masse wird zu Bonbons geprägt und weiter auf Raumtemperatur abgekühlt. Die vorgenannte Rezeptur kann auch auf einer kontinuierlichen Kochanlage (zum Beispiel Bosch, Klöckner-Hänsel) oder ohne Wasserzusatz in einer Schmelzextrusion zu Bonbons verarbeitet werden. Erfindungsgemäß können sowohl geprägte als auch gegossene Hartkaramellen hergestellt werden.

Die Hartkaramellen wurden wie folgt hergestellt. Das Süßungsmittelgemisch, dem ein Gemisch von bis zu 4 % (auf Trockenmasse), bestehend aus natürlichem Fruchtkonzentrat, Intensivsüßstoffen, Aromen und Farbstoffen zugemischt wird, wird mit Wasser auf einer kontinuierlichen Kochanlage auf 155-160°C gekocht. Zum Verdampfen des Wassers wird die Masse bis zu fünf Minuten vollem Vacuum ausgesetzt. Die durch das Evakuieren auf 124 bis 146°C abgekühlte Masse wird auf einem Kühlband gefaltet, zu einer plastisch verformbaren Masse kontrolliert weiter abgekühlt und in einer Prägestraße geprägt. Anschließend werden die Hartkaramellen in einem Kühltunnel weiter abgekühlt. Die vorgenannte Rezeptur kann auch satzweise oder ohne Wasserzusatz in einer Schmelzextrusion zu Bonbons verarbeitet werden. Erfindungsgemäß können sowohl geprägte als auch gegossene Hartkaramellen hergestellt werden.

**Beispiel 2: Lagerungsverhalten und Sensorik**

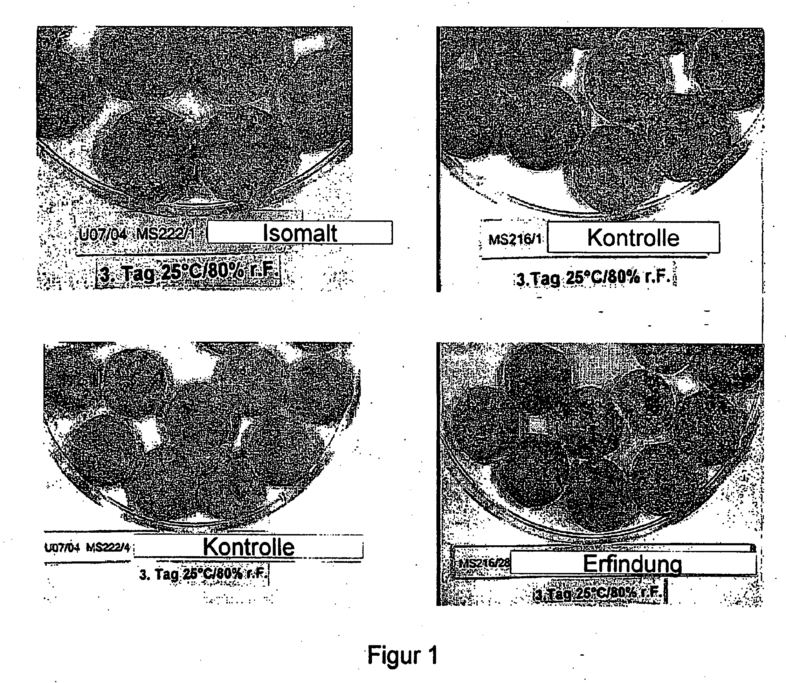

a) Die Glaskörper beziehungsweise Hartkaramellen des Beispiels 1 wurden offen in Petrischalen bei 25°C und einer relativen Luftfeuchtigkeit von 80 % gelagert. Die Wasseraufnahme der Glaskörper/Hartkaramellen wurde täglich mittels einer Waage ermittelt, das Aussehen der Glaskörper beurteilt und diese fotografiert (Figuren 1 bis 7). Dadurch konnten Rekristallisationstendenzen eindeutig nachgewiesen werden.

Den in den Figuren 1 bis 7 dargestellten Hartkaramellen lässt sich nach 3-tägiger Stresslagerung entnehmen, wie die Lagerstabilität der Hartkaramellen beschaffen ist. Eine vergleichsweise schlechte Lag'erqualität dokumentiert sich durch eine weisliche Einfärbung der Hartkaramellen, insbesondere eine Trübung, die eine Rekristallisation anzeigt. Eine schlechte Lagerqualität zeigt sich auch durch Falten- und Furchehbildung auf der Oberfläche sowie das schmierig werden beziehungsweise klebrig werden und Zerfließen der Oberfläche einer Hartkaramelle.

Die Figur 1 zeigt beginnende Eintrübung und eine sich ausbildende kristalline Oberfläche in der Isomalt Kontrolle MS 222/1 sowie der Kontroll-Hartkaramellen MS 216/1. MS 222/4 erscheint lagerstabil zu sein, weist aber trotz nicht-kristalliner Oberfläche eine schlechte Sensorik auf (vergleich b), nachstehend). Demgegenüber ist die erfindungsgemäße Hartkaramelle MS 216/28 durch eine weitgehend unveränderte Oberflächenbeschaffenheit, dass heisst kein Zerfließen, keine Klebrigkeit oder Rekristallisation gekennzeichnet. Obgleich die Muster MS 222/1 und MS 216/1 als sensorisch attraktiv beurteilt wurden (vergleich b) nachfolgend), ist deren Lagerstabilität im Vergleich zu den erfindungsgemäßen Hartkaramellen verschlechtert.

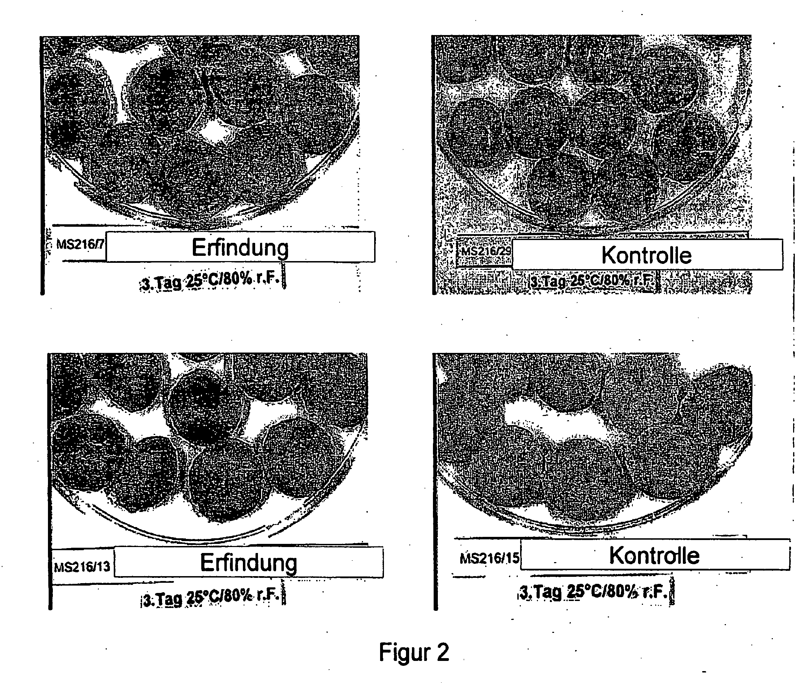

Der Figur 2 kann entnommen werden, dass die erfindungsgemäßen Hartkaramellen MS 216/7 und MS 216/13 ein hohes Maß an Lagerstabilität gemäß der vorstehenden Kriterien aufweisen, während die Kontrolle MS 216/15 bereits starke Kristallisationstendenzen aufweist und die Kontrolle MS 216/29 zwar keine Rekristallisationstendenzen zeigte, wohl aber sensorisch nicht überzeugend ist (vergleich Absatz b) nachstehend).

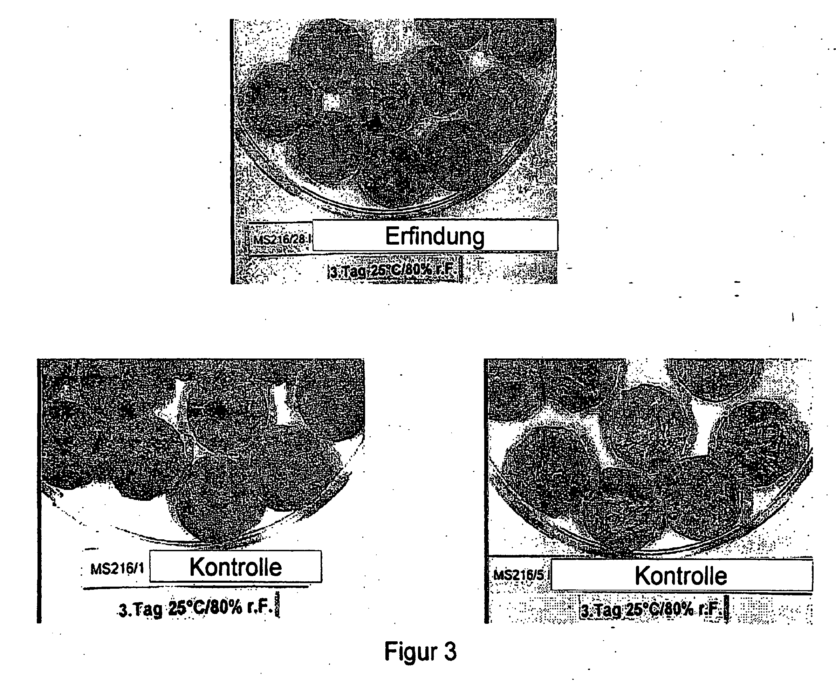

Der Figur 3 kann entnommen werden, dass die erfindungsgemäße Hartkaramelle MS 216/28 eine gute Lagerungsstabilität aufweist, während die Hartkaramellen MS 216/1 und MS 216/5 deutliche Strukturveränderungen an der Oberfläche aufzeigen und vergleichsweise gering lägerstabil sind.

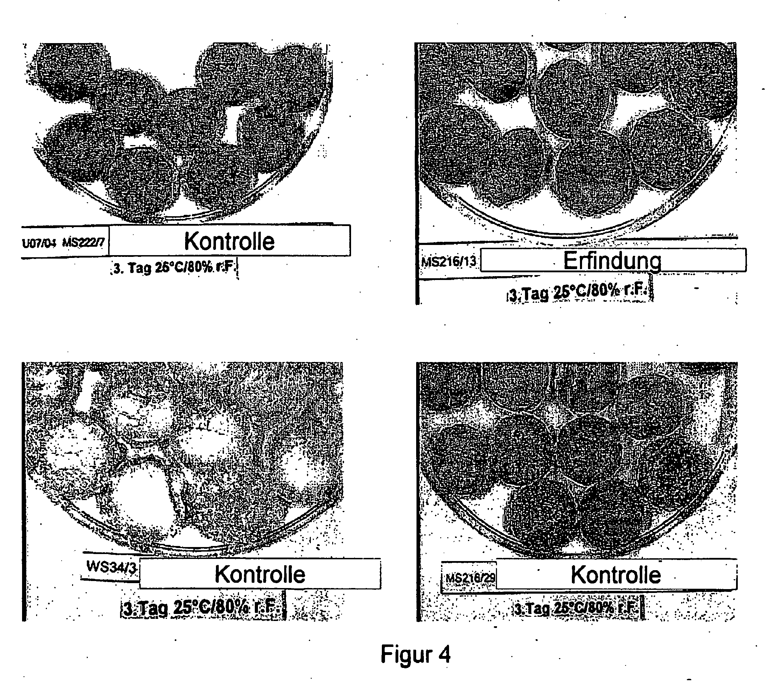

Der Figur 4 kann entnommen werden, dass die erfindungsgemäßen Hartkaramellen MS 216/13 ein hohes Maß an Lagerstabilität aufweisen, während die Kontrolle WS 34/3 starke Kristatisationserscheinungen aufzeigt. Die Hartkaramellen MS 222/7 und MS 216/29 zeichnen sich durch eine unbefriedigende Sensorik, wie aus dem nachstehenden Abschnitt b) hervorgeht, aus.

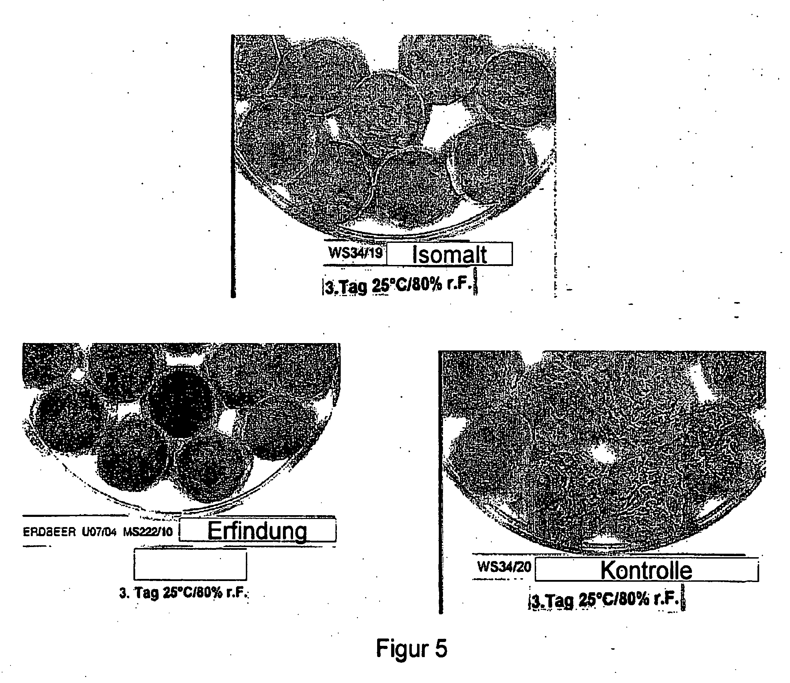

Der Figur 5 kann entnommen werden, dass die erfindungsgemäße Hartkaramelle MS 222/10 eine gute Lagerfähigkeit aufweist, während die Isomalt-Vergleichshartkaramelle WS 34/19 deutliche Strukturveränderungen aufweist, was auch für die Hartkaramelle WS 34/20 gilt.

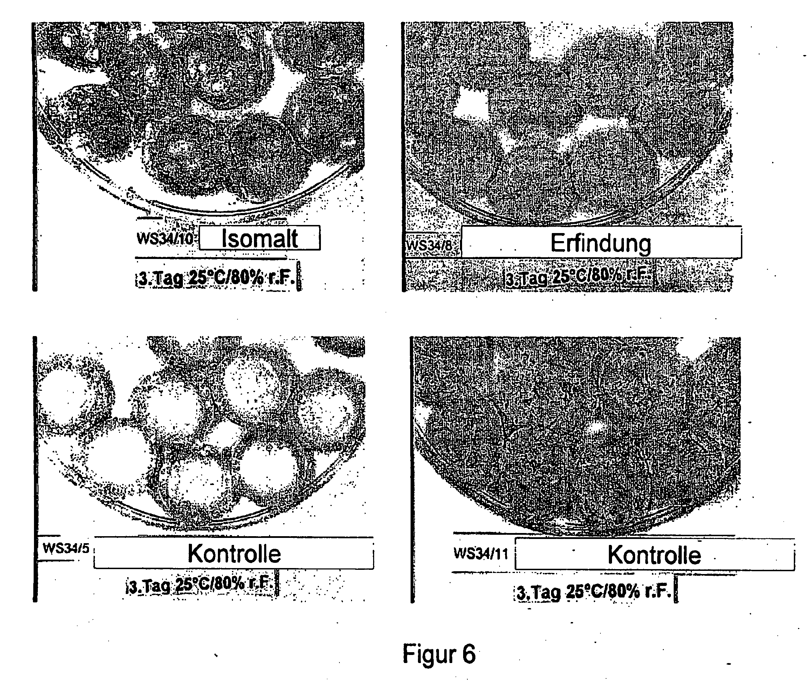

Der Figur 6 kann entnommen werden, dass die erfindungsgemäße Hartkaramelle WS 34/8 ein gutes Lagerverhalten aufweist, während die Isomalt-Kontrolle WS 34/10 ebenso wie die Kontrollen WS 34/5 und WS 34/11 eine sehr schlechte Lagerstabilität aufzeigen.

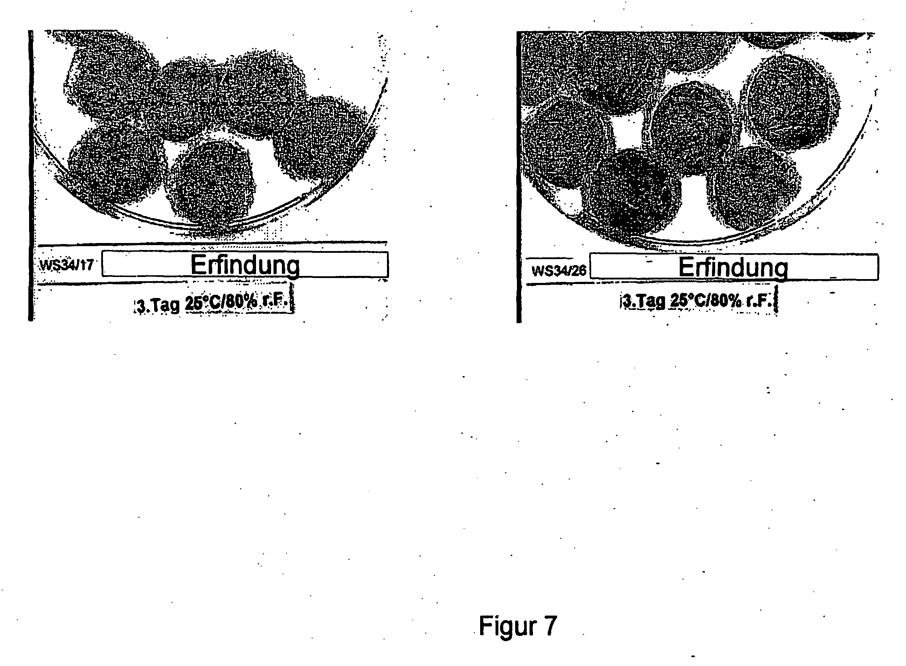

Der Figur 7 kann entnommen werden, dass die erfindungsgemäße Hartkaramellen WS 34/17 und WS 34/26 eine gute Lagerstabilität aufweisen.

Allgemein und über dieses Beispiel hinaus lässt sich daher die Lehre festhalten, dass die erfindungsgemäßen Hartkaramellen eine im Vergleich zu Isomalt-Hartkaramellen geringere Rekristallisationstendenz und höhere Lagerstabilität aufweisen.

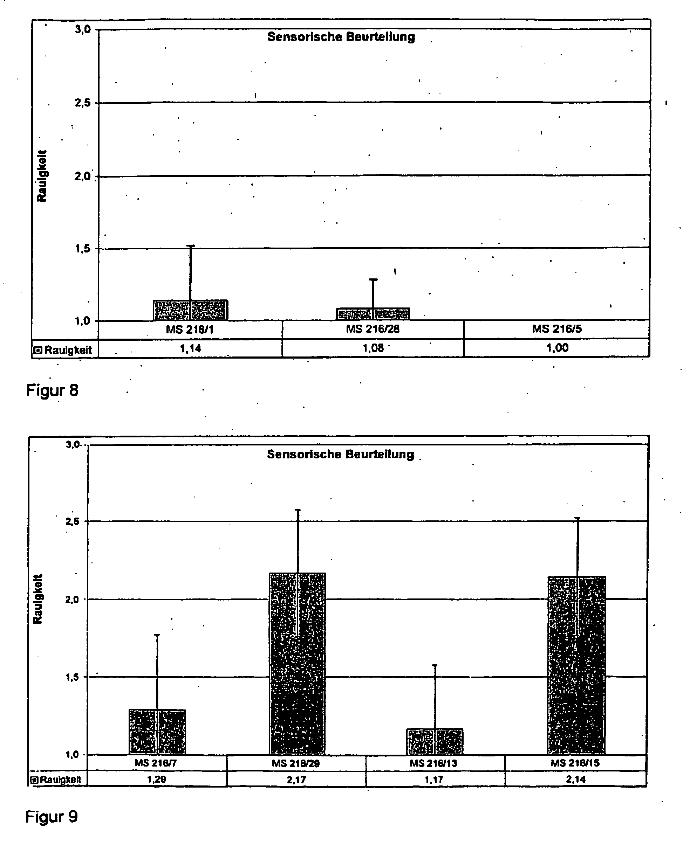

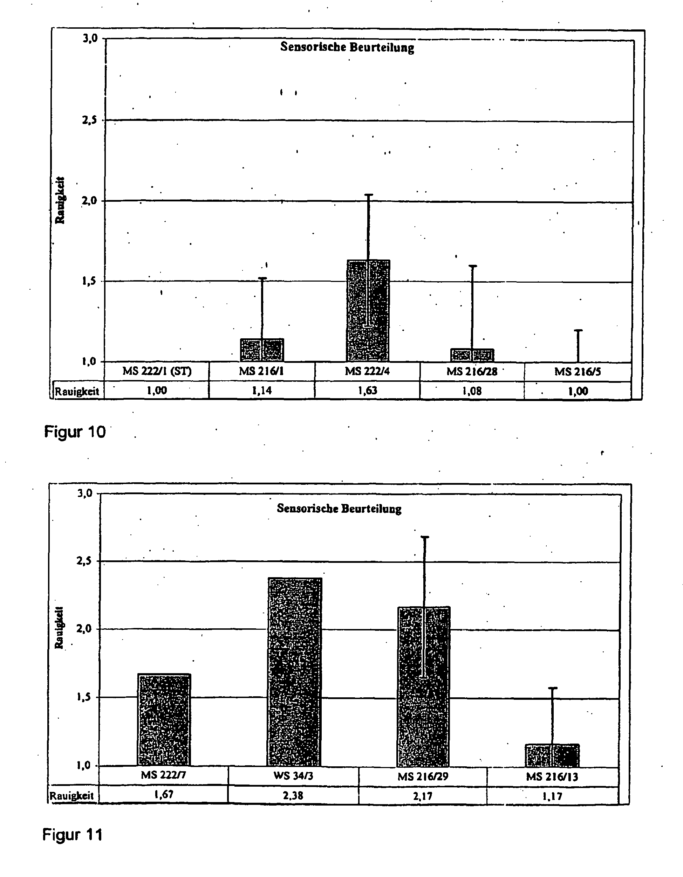

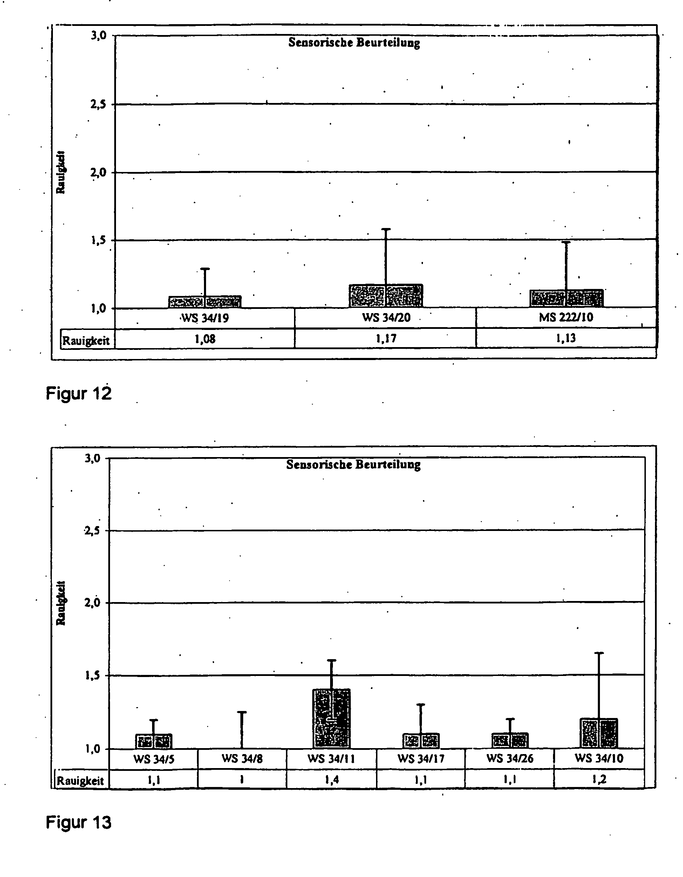

b) Die sensorischen Eigenschaften der erfindungsgemäßen Hartkaramellen wurden im Rahmen der vorliegenden Erfindung insbesondere anhand frisch hergestellter Hartkaramellen beurteilt, wobei die Hartkaramellen jeweils von mindestens 5 voneinander unabhängigen Probanden beurteilt und in eine Sensorik-Skala mit den Stufen 1 (glatt) bis 3 (rau) einzustufen waren (Figuren 8 bis 13). Eine verbesserte Sensorik liegt insbesondere dann vor, wenn die Hartkaramellen gegenüber Vergleichskaramellen, insbesondere Hartkaramellen mit einem höheren 1,1-GPM-Gehalt, zum Beispiel über 70 Gew.-% (auf Trockensubstanz des Gesamtgewichts) ein geringeres Ausmaß an Rauigkeit und/oder ein geringeres Ausmaß an Schmierigkeit und/oder Klebrigkeit aufweisen, wobei die Rauigkeit sowohl eine Anfangsrauigkeit, die eine Hartkaramelle bereits vor Verzehr aufweist als auch eine sich während des Verzehrs im Mund bildende Rauigkeit ist. Isomalt-Hartkaramellen weisen ein geringes Maß an Rauigkeit auf, zeichnen sich aber, wie aus Absatz a) vorstehend deutlich ist, durch vergleichsweise schlechte Lagerstabilität aus.

Den sensorischen Tests (Figuren 8 bis 13) lässt sich entnehmen, dass die Hartkaramellen mit den Bezeichnungen MS 216/1, WS 34/5, MS 216/5, MS 216/7, MS 216/13, WS 34/11, WS 34/17, WS 34/26, MS 222/1 (Isomalt-Kontrolle), WS 34/10 (Isomalt-Kontrolle), MS 216/28, MS 222/10, WS 34/8, WS 34/19 (Isomalt-Hartkaramelle) und WS 34/20 nur sehr geringe Rauigkeit aufweisen und sensorisch als attraktiv empfunden werden. Die Hartkaramellen mit den Bezeichnungen MS 216/29, MS 216/15, MS 222/4, MS 222/7 und WS 34/3 zeichnen sich durch ein sowohl gegenüber Isomalt-Hartkaramellen als auch gegenüber erfindungsgemäßen Hartkaramellen überhöhtes Maß an Rauigkeit aus. Insbesondere die Hartkaramellen MS 216/29, MS 222/7 und MS 222/4 zeigen im Lagertest zwar keine Rekristallisationseigenschaften, zeichnen sich im Sensoriktest jedoch durch eine sich während des Verzehrs unangenehm bemerkbar machende Ausbildung von Rauigkeit aus.

c) Ergebnisse

In der folgenden Tabelle sind die Glaskörper/Hartkaramellen aufgelistet, die aufgrund ihrer Lagerstabilität oder ihrer sensorischen Eigenschaften keine Verbesserung gegenüber Vergleichs-Hartkaramellen/Glaskörpern aus reinem Isomalt (Isomalt-Hartkaramellen (etwa äquimolares Gemisch aus 1,1-GPM und 1,6-GPS): WS 34/10, WS 34/19 und MS 222/1) zeigten.

Tabelle 19

| Probe | Wassergehalt [g/100g] | GPM [g/100g TS] | Maltit [g/100g TS] | Sorbit [g/100gTS] | schlechtere Sensorik | keine verbesserte Lagerstabilität |
|---|---|---|---|---|---|---|
| MS 216/29 | 1,6 | 79,10 | 5,58 | 0,32 | xxxxx | |
| WS 34/5 | 1,4 | 42,00 | 26,60 | 1,79 | | xxxxx |
| MS 222/7 | 1,5 | 76,40 | 5,97 | 0,38 | xxxxx | |
| MS 222/4 | 1.5 | 73,50 | 2,79 | 0.22 | xxxxx | |
| MS216/5 | 1.4 | 53,70 | 16,30 | 1,10 | | xxxxx |
| MS 216/1 | 1,5 | 68,70 | 0.06 | 0.26 | | xxxxx |
| WS 34/20 | 0,81 | 31,80 | 14,50 | 1,34 | | xxxxx |
| WS 34/11 | 1,2 | 29,80 | 15,0 | 0,89 | | xxxxx |
| MS 216/15 | 1,2 | 65,00 | 0,00 | 0,05 | xxxxx | xxxxx |
| WS 34/3 | 1,4 | 84,90 | 0,00 | 0,03 | xxxxx | xxxxx |

Es zeigt sich also, dass befriedigende Hartkaramellen nur dann erzielt werden können, wenn sowohl eine ansprechende Sensorik als auch eine hohe Lagerstabilität gleichzeitig erreicht werden. Hartkaramellen mit überzeugender Sensorik können nachteiligerweise eine nur geringe Lagerstabilität aufweisen, während Hartkaramellen mit guter Lagerstabilität eine schlechte Sensorik aufweisen können und deshalb von Verbrauchern nicht als attraktiv empfunden werden.

Insbesondere die Hartkaramellen mit den Nummern MS 222/4, MS 222/7 und MS 216/29, die sich durch einen im Vergleich zu Isomalt vergleichsweise hohen 1,1-GPM-Gehalt auszeichnen, weisen im Lagerungstest zwar keine die

**EP 1 776 015 B1**

Lagerstabilität beeinträchtigenden Rekristallisationsphänomene auf, wirken im Sensorik-Test jedoch rau, da während des Verzehrs der Hartkaramellen Rauigkeit, vermutlich durch Bildung von 1,1-GPM-Kristallen, entsteht beziehungsweise gebildet wird. Die genannten Muster der Hartkaramellen MS 222/4, MS 222/7 und MS 216/29 zeigen also, dass trotz des Ausbleibens von Rekristallisationsvorgängen während der Stresslagerung trotzdem Rauigkeit beim Verbraucher während des Verzehrs empfunden wird, was sich als nachteilig für die Existenz des Produktes erweist.

In der nachfolgenden Tabelle sind die erfindungsgemäßen Glaskörper und Hartkaramellen aufgelistet, deren Lagerstabilität gegenüber Vergleichs-Glaskörpern oder Vergleichs-Hartkaramellen aus reinem Isomalt ST (WS 34/10, WS 34/19 und MS 222/1) verbessert war und die gleichzeitig in der Sensorik als etwa ebenso gut beurteilt wurden, wie Hartkaramellen aus Isomalt beziehungsweise besser als Hartkaramellen mit einem oberhalb 70 Gew.-% liegenden 1,1-GPM-Gehalt.

Tabelle 20

| Probe | Rezeptur | Wassergehalt [g/100g] | GPM [g/100g TS] | Maltit [g/100g TS] | Sorbit [g/100g TS] |
|---|---|---|---|---|---|
| MS 216/7 | Glaskörper | 1,4 | 65,30 | 2,61 | 0,26 |
| MS 216/28 | Glaskörper | 1,6 | 69,90 | 5,86 | 0,35 |
| MS 222/10 | Erdbeer-Hartkaramelle | 1,7 | 68,80 | 5,67 | 0,39 |
| MS 216/13 | Glaskörper | 1,5 | 61,80 | 15,80 | 0,53 |
| WS 34/8 | Glaskörper | 1,3 | 61,80 | 16,60 | 1,41 |
| WS 34/26 | Erdbeer-Hartkaramelle | 1,2 | 61,05 | 15,80 | 1,53 |
| WS 34/17 | Sahne-Hartkafamelle | 1,2 | 61,00 | 14,60 | 1,15 |

**Patentansprüche**

1. Hartkaramellmasse, enthaltend 1,1-GPM (1-O-$\alpha$-D-Glucopyranosyl-D-mannit) in einer Menge von 61 bis 70 Gew.-% (bezogen auf Gesamttrockensubstanz der Hartkaramellmasse), Maltit in einer Menge von 2,5 bis 17 Gew.-% (bezogen auf Gesamttrockensubstanz der Hartkaramellmasse) und Sorbit in einer Menge von [S] (in Gew.-%) (bezogen auf Gesamttrockensubstanz der Hartkaramellmasse), wobei [S] = c + b x [1,1-GPM] + a $\times$ [1,1-GPM] x [Maltit] ist und wobei a = 0,0016 bis 0,0005, b = -0,0139 bis 0,0019 und c = 0,9 bis -0,19 ist.

2. Hartkaramellmasse nach Anspruch 1, wobei der 1,1-GPM-Gehalt 62 bis 68 Gew.% beträgt.

3. Hartkaramellmasse nach einem der vorhergehenden Ansprüche, wobei der Sorbit-Gehalt 0,1 bis 1,6 Gew.-% beträgt.

4. Hartkaramellmasse nach einem der vorhergehenden Ansprüche, wobei der Sorbit-Gehalt 0,2 bis 1,55 Gew.-% beträgt.

5. Hartkaramellmasse nach einem der vorhergehenden Ansprüche, wobei der Sorbit-Gehalt 0,4 bis 1,0 Gew.-% beträgt.

6. Hartkaramellmasse nach einem der vorhergehenden Ansprüche, wobei der 1,1-GPM-Gehalt 61 bis 70 Gew.-%, der 1,6-GPS-Gehalt 5,0 bis 36,4 Gew.-%, der Maltit-Gehalt 2,5 bis 17 Gew.-% und der Sorbit-Gehalt 0,1 bis 1,6 Gew.-% beträgt.

7. Hartkaramellmasse nach einem der vorhergehenden Ansprüche, wobei der Maltit-Gehalt 5,0 bis 16,0 Gew.-% beträgt.

8. Hartkaramellmasse nach einem der vorhergehenden Ansprüche, wobei der Wasser-Gehalt der Hartkaramellmasse weniger als 4 Gew.-%, bevorzugt weniger als 2 Gew.-%, bezogen auf das Gewicht der Hartkaramellmasse beträgt.

9. Hartkaramellmasse nach einem der vorhergehenden Ansprüche, wobei der Gehalt an Maltotriit 0 bis 8 Gew.-%,

**20**

vorzugsweise 3 bis 8 Gew.-% beträgt.

10. Hartkaramelle, enthaltend oder bestehend aus einer der Hartkaramellmassen einer der Ansprüche 1 bis 9.

11. Hartkaramelle nach Anspruch 10, wobei die Hartkaramelle eine gefüllte oder ungefüllte Hartkaramelle ist.

12. Hartkaramelle nach Anspruch 11, wobei die Hartkaramelle mit einer flüssigen oder festen Füllung versehen ist.

13. Hartkaramelle nach einem der Ansprüche 10 bis 12, wobei die Hartkaramellmasse nach einem der Ansprüche 1 bis 9 die Decke der Hartkaramelle bildet.

14. Hartkaramelle nach einem der vorhergehenden Ansprüche 10 bis 13, wobei die Hartkaramelle, insbesondere die Hartkaramellmasse Süßungsmittel, zum Beispiel Zuckeraustauschstoffe, Intensiv-Süßstoffe, Füllstoffe, Geschmacks- oder Aromastoffe, Farbstoffe, medizinisch wirksame Bestandteile, lebensmittelverträgliche Säuren, Fettersatzstoffe, Fett, Molkereierzeugnisse und/oder Mineralsalze und/oder Emulgatoren enthält, vorzugsweise in einer Gesamtmenge von 1 bis 10 Gew.% (bezogen auf Gesamttrockensubstanz der Hartkaramellmasse).

15. Hartkaramelle nach einem der vorhergehenden Ansprüche 10 bis 14, wobei die Hartkaramelle insbesondere die Hartkaramellmasse, mindestens ein weiteres Süßungsmittel, insbesondere 5,0 Gew.-% bis 36,4 Gew.-%, bevorzugt 11,4 bis 36,4 Gew.-% (jeweils bezogen auf Gesamttrockensubstanz der Hartkäramellmasse) enthält, ausgewählt aus der Gruppe bestehend aus 1,6-GPS (6-O-$\alpha$-D-Glucopyrandsyl-D-sorbit), 1,1-GPS (1-O-$\alpha$-D-Glucopyranosyl-D-Sorbit). Maltotriit, Mannit und höhere Polyole, zum Beispiel hydrierte oder nicht-hydrierte Oligosaccharide.

16. Verfahren zur Herstellung einer Hartkaramelle nach einem der vorhergehenden Ansprüche 10 bis 15, wobei eine wässrige Lösung oder Suspension eines Gemisches, enthaltend 1,1-GPM, Maltit und Sorbit, insbesondere enthaltend 61 bis 70 Gew.-% 1,1-GPM, 2,5 bis 17 Gew.% Maltit und Sorbit in einer Menge von [S] (jeweils bezogen auf Gesamttrockensubstanz der Hartkaramellmasse), wobei [S] sich aus der Gleichung gemäß Anspruch 1 ergibt; unter Hitzeeinwirkung gekocht, vorzugsweise bei Temperaturen von 145 bis 170°C, evaporiert, abgekühlt, geformt und eine Hartkaramelle erhalten wird.

17. Verfahren zur Herstellung einer Hartkaramelle nach einem der Ansprüche 10 bis 15, wobei ein Gemisch enthaltend 1,1-GPM, Maltit und Sorbit, insbesondere enthaltend 61 bis 70 Gew.-% 1,1-GPM, 2,5 bis 17 Gew.-% Maltit und in einer Menge von [S] Sorbit wobei [S] sich aus der Gleichung gemäß Anspruch 1 ergibt, schmelzextrudiert, abgekühlt, geformt und eine Hartkaramelle erhalten wird.

**Claims**

1. Hard candy mass, containing 1,1-GPM (1-O-$\alpha$-D-glucopyranosyl-D-mannitol) in a quantity from 61 to 70% by weight (referred to the total dry material of the hard candy mass), maltitol in a quantity from 2.5 to 17% by weight (referred to the total dry material of the hard candy mass) and sorbitol in a quantity of [S] (in % by weight) (referred to the total dry material of the hard candy mass) wherein [S] = c + b x [1,1-GPM] + a x [1,1-GPM] x [maltitol] and wherein a = 0.0016 to 0.0005, b = -0.0139 to 0.0019 and c = 0.9 to -0.19 is.

2. Hard candy mass according to claim 1, wherein the 1,1-GPM content is 62 to 68% by weight.

3. Hard candy mass according to one of the preceding claims, wherein the sorbitol content is 0.1 to 1.6% by weight.

4. Hard candy mass according to one of the preceding claims, wherein the sorbitol content is 0.2 to 1.55% by weight.

5. Hard candy mass according to one of the preceding claims, wherein the sorbitol content is 0.4 to 1.0% by weight.

6. Hard candy mass according to one of the preceding claims, wherein the 1,1-GPM content is 61 to 70% by weight, the 1,6-GPS content is 5.0 to 36.4% by weight, the maltitol content is 2.5 to 17% by weight and the sorbitol content is 0.1 to 1.6% by weight.

7. Hard candy mass according to one of the preceding claims, wherein the maltitol content is 5.0 to 16.0% by weight.

**8.** Hard candy mass according to one of the preceding claims, wherein the water content of the hard candy mass is less than 4% by weight, preferably less than 2% by weight, referred to the weight of the hard candy mass.

**9.** Hard candy mass according to one of the preceding claims, wherein the maltotriitol content is 0 to 8% by weight, preferably 3 to 8% by weight.

**10.** Hard candy, containing or consisting of one of the hard candy masses according to one of the claims 1 to 9.

**11.** Hard candy according to claim 10, wherein the hard candy is a filled or unfilled hard candy.

**12.** Hard candy according to claim 11, wherein the hard candy is provided with a liquid or solid filling.

**13.** Hard candy according to one of the claims 10 to 12, wherein the hard candy mass according to one of the claims 1 to 9 forms the coating of the hard candy.

**14.** Hard candy according to one of the preceding claims 10 to 13, wherein the hard candy, in particular the hard candy mass contains sweetening agents, for example sugar substitutes, intense sweeteners, fillers, flavors or flavoring agents, dyes, medically effective constituents, food-compatible acids, fat substitutes, fat, dairy products and/or mineral salts and/or emulgators, preferably in a total quantity from 1 to 10% by weight (referred to total dry material of the hard candy mass).

**15.** Hard candy according to one of the preceding claims 10 to 14, wherein the hard candy, specifically the hard candy mass contains at least one additional sweetening agent, specifically 5.0% by weight to 36.4% by weight, preferably 11.4 to 36.4% by weight (each referred to the total dry material of the hard candy mass), selected from the group consisting of 1,6-GPS (6-O-$\alpha$-D-glucopyranosyl-D-sorbitol), 1,1-GPS (1-O-$\alpha$-D-glucopyranosyl-D-sorbitol), maltotriitol, mannitol and higher polyols, for example hydrogenated or non-hydrogenated oligosaccharides.

**16.** Method for manufacturing a hard candy according to one of the preceding claims 10 to 15, wherein an aqueous solution or suspension of a mixture, containing 1,1-GPM, maltitol and sorbitol, specifically containing 61 to 70% by weight 1,1-GPM, 2.5 to 17% by weight maltitol and sorbitol in a quantity of [S] (each referred to the total dry material of the hard candy mass), wherein [S] results from the equation according to claim 1, is boiled under the influence of heat, preferably at temperatures from 145 to 170°C, is evaporated, cooled, shaped and a hard candy is obtained.

**17.** Method for manufacturing a hard candy according to one of the claims 10 to 15, wherein a mixture containing 1,1-GPM, maltitol and sorbitol, specifically containing 61 to 70% by weight 1,1-GPM, 2.5 to 17% by weight maltitol and in a quantity of [S] sorbitol, wherein [S] results from the equation according to claim 1, is melt extruded, cooled, shaped and a hard candy is obtained.

**Revendications**

**1.** Masse de caramel dur, contenant 1,1-GPM (1-O-$\alpha$-D-glucopyranosyl-D-mannitol) dans une quantité allant de 61 à 70 % en poids (par rapport à la matière sèche totale de la masse de caramel dur), maltitol dans une quantité allant de 2,5 à 17 % en poids (par rapport à la matière sèche totale de la masse de caramel dur) et sorbitol dans une quantité de [S] (en pour cent en poids) (par rapport à la matière sèche totale de la masse de caramel dur), avec [S] = c + b x [1,1-GPM] + a x [1,1-GPM] x [maltitol] et avec a = 0,0016 à 0,0005, b = -0,0139 à 0,0019 et c = 0,9 à -0,19.

**2.** Masse de caramel dur selon la revendication 1, dans laquelle la teneur en 1,1-GPM est de 62 à 68 % en poids.

**3.** Masse de caramel dur selon l'une des revendications précédentes, dans laquelle la teneur en sorbitol est de 0,1 à 1,6 % en poids.

**4.** Masse de caramel dur selon l'une des revendications précédentes, dans laquelle la teneur en sorbitol est de 0,2 à 1,55 % en poids.

**5.** Masse de caramel dur selon l'une des revendications précédentes, dans laquelle la teneur en sorbitol est de 0,4 à 1,0 % en poids.

**6.** Masse de caramel dur selon l'une des revendications précédentes, dans laquelle la teneur en 1,1-GPM est de 61 à 70 % en poids, la teneur en 1,6-GPS est de 5,0 à 36,4 % en poids, la teneur en maltitol est de 2,5 à 17 % en poids, et la teneur en sorbitol est de 0,1 à 1,6 % en poids.

**7.** Masse de caramel dur selon l'une des revendications précédentes, dans laquelle la teneur en maltitol est de 5,0 à 16,0 % en poids.

**8.** Masse de caramel dur selon l'une des revendications précédentes, dans laquelle la teneur en eau de la masse de caramel dur s'élève à moins de 4 % en poids, de préférence moins de 2 % en poids, par rapport au poids de la masse de caramel dur.

**9.** Masse de caramel dur selon l'une des revendications précédentes, dans laquelle la teneur en maltotriitol est de 0 à 8 % en poids, de préférence de 3 à 8 % en poids.

**10.** Caramel dur, contenant ou constitué de l'une des masses de caramel dur de l'une des revendications 1 à 9.

**11.** Caramel dur selon la revendication 10, dans lequel le caramel dur est fourré ou pas fourré.

**12.** Caramel dur selon la revendication 11, dans lequel le caramel dur est doté d'un coeur liquide ou solide.

**13.** Caramel dur selon l'une des revendications 10 à 12, dans lequel la masse de caramel dur selon la revendication 1 à 9 forme l'enrobage du caramel dur.

**14.** Caramel dur selon l'une des revendications précédentes 10 à 13, dans lequel le caramel dur, notamment la masse de caramel dur, contient des édulcorants, par exemple des succédanés du sucre, des édulcorants intensifs, des agents de charge, des agents de sapidité ou d'aromatisation, des colorants, des ingrédients médicalement actifs, des acides alimentaires, des succédanés de graisse, de la matière grasse, des produits laitiers et/ou des sels minéraux et/ou des émulsifiants, de préférence dans une quantité totale comprise entre 1 et 10 % en poids (par rapport à la matière sèche totale de la masse de caramel dur).

**15.** Caramel dur selon l'une des revendications précédentes 10 à 14, dans lequel le caramel dur, notamment la masse de caramel dur, contient au moins un autre édulcorant, en particulier de 5,0 % en poids à 36,4 % en poids, de préférence de 11,4 à 36,4 % en poids (chaque fois par rapport à la matière sèche totale de la masse de caramel dur), sélectionné du groupe composé de 1,6-GPS (6-O-$\alpha$-D-glucopyranosyl-D-sorbitol), 1,1-GPS (1-O-$\alpha$-D-gluco-pyranosyl-D-sorbitol), maltotriitol, mannitol et polyols supérieurs, par exemple oligosaccharides hydrogénés ou pas hydrogénés.

**16.** Procédé pour la préparation d'un caramel dur selon l'une des revendications précédentes 10 à 15, dans lequel une solution aqueuse ou une suspension d'un mélange, contenant 1,1-GPM, maltitol et sorbitol, notamment contenant de 61 à 70 % en poids de 1,1-GPM, de 2,5 à 17 % en poids de maltitol et sorbitol dans une quantité de [S] (chaque fois par rapport à la matière sèche totale de la masse de caramel dur), avec [S] résultant de l'équation selon la revendication 1, étant cuit sous l'effet de la chaleur, de préférence à des températures comprises entre 145 et 170°C, évaporé, refroidi et formé pour recevoir un caramel dur.

**17.** Procédé pour la préparation d'un caramel dur selon l'une des revendications 10 à 15, dans lequel un mélange contenant 1,1-GPM, maltitol et sorbitol, notamment contenant de 61 à 70 % en poids de 1,1-GPM, de 2,5 à 17 % en poids de maltitol et dans une quantité de [S] sorbitol, avec [S] résultant de l'équation selon la revendication 1, est soumis à une extrusion de matière fondue, refroidi et formé pour avoir un caramel dur.

Figur 1

Figur 2

Figur 3

Figur 4

27

Figur 5

Figur 6

Figur 7

Figur 8

Figur 9

Figur 10

Figur 11

Figur 12

Figur 13

**EP 1 776 015 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0303295 A2
- US 4587119 A
- US 4971798 A
- EP 0625578 B1
- DE 19532396 C2
- EP 0533334 A
- EP 0611527 A
- EP 1194042 B1
- EP 1217898 B1